# EUROPEAN PATENT SPECIFICATION

(11) **EP 2 105 478 B1**
(45) Date of publication and mention of the grant of the patent: **28.02.2018**
(21) Application number: 09003459.6
(22) Date of filing: 10.03.2009
(51) Int. Cl.: C09D 11/10, C09D 11/00

(54) **Inkjet recording method and inkjet recording system**
Tintenstrahlaufzeichnungsverfahren und Tintenstrahlaufzeichnungssystem
Procédé d'enregistrement par jet d'encre et système d'enregistrement par jet d'encre

(30) Priority: 26.03.2008 JP 2008082062
(43) Date of publication of application: 30.09.2009
(73) Proprietor: FUJIFILM Corporation, Minato-ku Tokyo (JP)
(72) Inventor: Ohnishi, Hironori, Ashigarakami-gun Kanagawa (JP)
(74) Representative: Hoffmann Eitle

(56) References cited:
- EP-A- 1 752 504
- US-A1- 2007 081 063
- US-A1- 2007 129 457

## Description

The present invention relates to an inkjet recording method and an inkjet recording system.

As image recording methods for forming an image on a recording medium such as paper based on an image data signal, there are an electrophotographic system, sublimation type and melt type thermal transfer systems, an inkjet system, etc. In the electrophotographic system, a process of forming an electrostatic latent image on a photosensitive drum by electrically charging and exposing is required, and the system is complicated; as a result, there is the problem that the production cost is high. With regard to the thermal transfer system, although the equipment is inexpensive, due to the use of an ink ribbon there is the problem that the running cost is high and waste material is generated.

On the other hand, with regard to the inkjet system, the printing equipment is inexpensive, it is not necessary to use a plate when printing, and since an image is formed directly on a recording medium by discharging an ink only on a required image area, the ink can be used efficiently and the running cost is low particularly in the case of small lot production. Furthermore, there is little noise and it is excellent as an image recording system, and has been attracting attention in recent years.

In particular, an inkjet recording ink that is curable upon exposure to radiation such as UV rays (radiation-curing inkjet recording ink) is an excellent system from the viewpoint of it being printed on various types of substrates because of the drying properties being excellent compared with a solvent-based ink since the majority of the ink components cure upon exposure to radiation such as UV rays, and the image being resistant to spreading.

There is a demand for an ink composition contained in a radiation-curing ink to cure at high sensitivity in order to form an image with high image quality.

By achieving high sensitivity for the ink composition, high curability upon exposure to actinic radiation can be imparted, and there are therefore provided various benefits such as a reduction in power consumption, a longer lifetime of an actinic radiation generator due to a decrease in the load thereon, and suppression of evaporation of uncured low-molecular-weight material and of a reduction in the strength of an image formed. There is also a desire for an ink composition that gives an image (printed material) that is resistant to cracking, etc., and gives a cured coating that has excellent impact resistance and flexibility. A cured coating having high flexibility and impact resistance enables a printed material to be displayed and stored for a long period of time in various environments while maintaining high image quality, and also has advantages such as ease of handling of the printed material.

For example, International Patent Application WO 2007/013368 discloses, as an ink composition, a polymerizable monomer-containing actinic radiation-curing ink for inkjet which comprises as polymerizable monomers, relative to the total polymerizable monomers, 95 to 99.99 wt % of a monofunctional monomer and 0.01 to 5 wt % of a polyfunctional monomer, and for which the ductility of a cured coating exceeds 120%.

Furthermore, JP-PCT-2007-505964 (JP-PCT denotes a published Japanese translation of a PCT application) discloses a radiation-curing inkjet ink comprising at least 65 wt % of at least one monofunctional ethylenically unsaturated monomer, and at least one tri- or higher-functional ethylenically unsaturated monomer, the ink having a surface tension at 25°C of no greater than 36 dynes/cm.

Moreover, an inkjet ink for vinyl chloride (JP-A-2006-169419 (JP-A denotes a Japanese unexamined patent application publication)) and an inkjet ink for polycarbonate (JP-A-2006-169420) have been disclosed.

However, although the ink compositions described in International Patent Application WO 2007/013368 and JP-PCT-2007-505964 have high flexibility and are thus used for a flexible roll support such as vinyl chloride or shrink film, a printed material is susceptible to being scratched and, when they are used for a printed material to which a label, etc. is affixed, there is the problem of damage, etc. Furthermore, when they are printed on a hard support such as a polycarbonate or acrylic resin plate, printed materials might be damaged when stacking or transporting them.

Furthermore, an inkjet ink for vinyl chloride (JP-A-2006-169419 (JP-A denotes a Japanese unexamined patent application publication)) and an inkjet ink for polycarbonate (JP-A-2006-169420) have been disclosed, but since it is necessary to refill with an ink composition for each support if one printer is used, the productivity is poor. Moreover, they cannot be used when printing on other acrylic or polyolefin resins. In the conventional technique, a printer loaded with one type of ink composition for each color per printer is employed, and it is difficult to carry out printing using an ink composition that is optimal for each type of support.

US-A-2007/0081063 provides an ultraviolet curable ink set comprising: a white ink composition containing at least a white pigment and a polymerizable compound; and a color ink composition containing at least a coloring material of a color other than white and a polymerizable compound, wherein at least one of the white ink composition and the color ink composition contains a polymerization initiator. Also disclosed is an image recording method comprising printing the ultraviolet curable ink set on a transparent medium.

It is an object of the present invention to provide an inkjet recording method and an inkjet recording system that enable printing to be carried out using an ink composition that is optimal for a large variety of supports by means of one inkjet recording system and to enable a printed material having excellent flexibility and scratch resistance to be produced.

According to a first aspect, the present invention provides an inkjet recording method comprising the steps of: preparing an ink set which comprises: (i) at least one ink composition A comprising a polymerization initiator (a-1) and a polymerizable compound (b-1), at least 65 wt.% of the polymerizable compound (b-1) being a monofunctional polymerizable compound, and (ii) at least one ink composition B having the same colour as ink composition A and comprising a polymerization initiator (a-2) and a polymerizable compound (b-2), at least 50 wt.% of the polymerizable compound (b-2) being a polyfunctional polymerizable compound; detecting one or more characteristics and/or the composition of the support; selecting the relative amounts of ink composition A and ink composition B to be discharged onto a support based on the detected characteristic(s) and/or composition of the support; and discharging the selected relative amounts of the ink compositions onto the support.

Preferably the detected characteristic(s) and/or composition of the support is at least one of support hardness, support thickness, support stretching characteristics, support thermal characteristics, support elemental composition, support compound composition and support resin composition. In this case, the detected characteristic(s) and/or composition of the support is preferably support hardness and support thickness.

Preferably both ink composition A and ink composition B are selected and discharged onto the support.

Preferably the method further comprises the step of curing the discharged ink(s) using actinic radiation.

According to a second aspect, the present invention provides an inkjet recording apparatus comprising: an ink set which comprises: (i) at least one ink composition A comprising a polymerization initiator (a-1) and a polymerizable compound (b-1), at least 65 wt.% of the polymerizable compound (b-1) being a monofunctional polymerizable compound, and (ii) at least one ink composition B having the same colour as ink composition A and comprising a polymerization initiator (a-2) and a polymerizable compound (b-2), at least 50 wt.% of the polymerizable compound (b-2) being a polyfunctional polymerizable compound; means for detecting more or more characteristics and/or the composition of the support; means for selecting the relative amounts of ink composition A and ink composition B to be discharged onto a support based on the detected characteristic(s) and/or composition of the support; and means for discharging the selected relative amounts of the ink compositions onto the support.

Preferably the detection means is able to detect at least one of support hardness, support thickness, support stretching characteristics, support thermal characteristics, support elemental composition, support compound composition and support resin composition. In this case, it is preferred that the detection means is able to detect support hardness and support thickness.

Preferably the selection means is able to select the relative amounts of ink composition A and ink composition B so that both ink compositions are discharged onto the support.

Preferably the apparatus further comprises means for curing the discharged ink composition(s) using actinic radiation.

In accordance with the present invention, there can be provided an inkjet recording method and an inkjet recording system that enable printing to be carried out using an ink composition that is optimal for a large variety of supports by means of one inkjet recording system and that enable a printed
material having excellent flexibility and scratch resistance to be produced.

### BRIEF DESCRIPTION OF DRAWINGS

(FIG. 1) A schematic diagram showing one example of an inkjet recording system that can suitably be used in the inkjet recording method of the present invention.
(FIG. 2) A schematic diagram showing another example of an inkjet recording system that can suitably be used in the inkjet recording method of the present invention.

### EXPLANATION OF REFERENCE NUMERALS AND SYMBOLS

1: Inkjet recording system
2Y, 2M, 2C, 2K, 2W, 2CL: Means for applying ink composition A
3Y, 3M, 3C, 3K, 3W, 3CL: Means for exposing ink composition A to light
4Y, 4M, 4C, 4K, 4W, 4CL: Means for applying ink composition B
5Y, 5M, 5C, 5K, 5W, 5CL: Means for exposing ink composition B to light
6: Transport conveyor
7A, 7B: Support transport means
8: Means for completely curing image
9: Hardness measurement detector
10: Film thickness measurement detector

The present invention is explained in detail below.

### Inkjet recording method

The inkjet recording method of the present invention comprises a preparatory step of preparing an ink set comprising at least ink composition A comprising (a-1) a polymerization initiator and (b-1) a polymerizable compound, at least 65 wt % of the total weight of the polymerizable compound (b-1) being a monofunctional polymerizable compound, and ink composition B comprising (a-2) a polymerization initiator and (b-2) a polymerizable compound, at least 50 wt % of the total weight of the polymerizable compound (b-2) being a polyfunctional polymerizable compound, and a selection step of selecting, as an ink composition used, ink composition A, ink composition B, or the proportions of ink composition A and ink composition B used according to the characteristics and/or the composition of a support used.

### Preparatory step

The inkjet recording method of the present invention comprises a preparatory step of preparing an ink set comprising at least ink composition A comprising (a-1) a polymerization initiator and (b-1) a polymerizable compound, at least 65 wt % of the total weight of the polymerizable compound (b-1) being a monofunctional polymerizable compound, and ink composition B comprising (a-2) a polymerization initiator and (b-2) a polymerizable compound, at least 50 wt % of the total weight of the polymerizable compound (b-2) being a polyfunctional polymerizable compound.

The ink set in the preparatory step may suitably employ an ink set described below.

The ink set in the preparatory step may comprise one type of ink composition A on its own or two or more types thereof, and may comprise one type of ink composition B on its own or two or more types thereof.

Furthermore, the ink set in the preparatory step may comprise one type or two or more types of ink compositions other than ink composition A and ink composition B, but it is preferably an ink set that does not comprise an ink composition other than ink composition A and ink composition B, that is, an ink set comprising only one or more types of ink composition A and one or more types of ink composition B.

Moreover, the ink set that can be used in the present invention preferably comprises ink composition A and ink composition B of each color such as, for example, yellow, cyan, magenta, black, white, and clear. For example, when an image is formed from ink compositions of the three colors yellow, cyan, and magenta, the ink set that can be used in the present invention preferably comprise six types, that is, yellow ink composition A, yellow ink composition B, cyan ink composition A, cyan ink composition B, magenta ink composition A, and magenta ink composition B.

### Selection step

The inkjet recording method of the present invention comprises a selection step of selecting, as an ink composition used, ink composition A, ink composition B, or the proportions of ink composition A and ink composition B used according to the characteristics and/or the composition of a support used.

With regard to the characteristics of the support used, there can be cited as examples support hardness, support thickness, support stretching characteristics such as stretching ratio and tensile strength, and support thermal characteristics such as glass transition temperature and coefficient of thermal expansion.

The composition of the support used is not particularly limited, and it may be elemental composition, compound composition, or resin composition such as monomer composition.

In the selection step, it is preferable to select an ink composition used according to the support hardness and/or the support thickness in particular, and it is more preferable to select an ink composition used according to the support hardness and the support thickness.

The support (recording medium) that can be used in the present invention is not particularly limited, and those known as a support or a recording material may be used.

Examples thereof include paper, paper laminated with a plastic (e.g. polyethylene, polypropylene, polystyrene, etc.), a metal plate (e.g. aluminum, zinc, copper, etc.), a plastic film (e.g. cellulose diacetate, cellulose triacetate, cellulose propionate, cellulose butyrate, cellulose acetate butyrate, cellulose nitrate, polyethylene terephthalate, polyethylene, polystyrene, polypropylene, polycarbonate, polyvinylacetal, etc.), and paper or plastic film laminated or vapor-deposited with the above metal.

Furthermore, as the support a non-absorbing support such as a plastic or metal plate may suitably be used.

In the selection step, according to the characteristics and/or the composition of the support used, as an ink composition used, use of either ink composition A or ink composition B is selected or the proportions of ink composition A and ink composition B used are selected, and it is preferable to select as the ink composition used the proportions of ink composition A and ink composition B used according to the characteristics and/or the composition of a support used.

Furthermore, when an ink set comprising ink composition A and ink composition B for each color is used, the selection step preferably comprises selecting as an ink composition used the proportions used of ink composition A and ink composition B of the same color according to the characteristics and/or the composition of a support used. In this case, the proportions used of ink composition A and ink composition B of one color may be the same as or different from the proportions used of ink composition A and ink composition B of another color, and the proportions used may be selected appropriately according to the hue of each ink composition used, the type and amount of polymerizable compound used, etc.

Furthermore, in the selection step, when an ink composition used is selected according to the hardness of a support used, it is preferable to make the selection by matching the support hardness with the hardness of an ink composition cured coating. For example, when a support having low hardness is used, it is preferable to increase the proportion of ink composition A used or to use ink composition A alone, and when a support having high hardness is used, it is preferable to increase the proportion of ink composition B used or to use ink composition B alone.

Specific examples of a method of selecting by matching the support hardness with the hardness of an ink composition cured coating include a method in which results of measuring the hardness of various types of supports and results of measuring the hardness of a cured coating of ink composition A, ink composition B, and ink compositions having varied proportions of ink composition A/ink composition B used are registered in advance in an inkjet recording system such as a printer, and a user inputs a type of support into the inkjet recording system or the inkjet recording system comprises means for detecting a support to thus automatically identify it, thereby automatically changing an ink composition used, and a method in which results of measuring the hardness of a cured coating of ink composition A, ink composition B, and ink compositions having varied proportions of ink composition A/ink composition B used are registered in advance in an inkjet recording system such as a printer, and the inkjet recording system comprises means for detecting the hardness of a support to thus automatically measure the hardness of a support, thereby automatically changing an ink composition used.

A method for changing ink composition A, ink composition B, and the proportions of ink composition A/ink composition B used is not particularly limited, and ink composition A or ink composition B may be used on its own or both ink composition A and ink composition B may be used.

When both ink composition A and ink composition B are used, ink composition A and ink composition B may be discharged onto a support via separate heads. When both inks of ink composition A and ink composition B are discharged onto a support via separate heads, it is preferable to discharge ink composition A first and then ink composition B since the flexibility of a cured coating is maintained and the surface hardness increases.

Furthermore, when both ink composition A and ink composition B are used, an intermediate tank may be provided between ink tanks and an ink discharge head, and ink composition A and ink composition B may be mixed in the intermediate tank according to a support and then discharged onto the support via the ink discharge head.

Moreover, when a support is supplied as a roll, since a printed material is wound up into a roll shape, it is preferable to increase the proportion of ink composition A, which has high flexibility. It is preferable to select an ink composition used by providing a mechanism for inputting into an inkjet recording system a support being in a roll shape or providing an automatic detection mechanism such as a sensor, etc. in the location in an inkjet recording system where a support is disposed.

When the thickness of a support is measured and the thickness is less than 100 µm, it is preferable to use at least 20 wt % of ink composition A, and when the thickness is 100 µm or greater, it is preferable to use at least 20 wt % of ink composition B.

Moreover, a mode in which when the thickness of a support is measured and the thickness is less than 100 µm ink composition A alone is used, and when the thickness is 100 µm or greater ink composition B alone is used may also be carried out.

Furthermore, in the case of a roll support in which a sheet-shaped support is wound as a roll, it is preferable to carry out discharge by increasing the proportion of ink composition A by at least 5 wt % compared with a normal support. When the proportion of ink composition A is increased by at least 5 wt %, flexibility can be guaranteed, and cracks can be prevented from occurring when a printed material is wound up into a roll shape.

Moreover, in the selection step, it is more preferable to select an ink composition used according to support hardness and support thickness.

Specifically, when the support is in a roll shape or the support has a thickness of no greater than 100 µm, it is preferable, compared with the proportions of ink composition A and ink composition B used that are determined according to the hardness, to increase the proportion of ink composition A used by at least 5 wt % and then discharge it since flexibility can be guaranteed and cracks can be prevented from occurring when a printed material is wound up into a roll shape.

### Detection step

The inkjet recording method of the present invention preferably comprises a detection step of detecting the characteristics and/or the composition of a support used. The detection step is preferably carried out prior to the selection step.

In the inkjet recording method of the present invention, for example, a support used is inputted into an inkjet recording system, and an ink composition used may be selected according to the support inputted, but from the viewpoint of simplicity and reliability it is preferable for the method to comprise a step of detecting the characteristics and/or the composition of a support used prior to the selection means.

As a method for detecting the characteristics of a support, for example, the methods shown below may be used preferably.

As a method for measuring the hardness of a support, a known method may be used, and specific preferred examples thereof include micro-indentation hardness measurement methods such as Brinell hardness, Vickers hardness, Knoop hardness, Rockwell hardness, Meyer hardness, Durometer hardness, Barcol hardness, and Monotron hardness, scratch hardness measurement methods such as pencil hardness and Martens hardness, and rebound hardness measurement methods such as Shore hardness. Among them, hardness measurement for detecting an indentation depth of an indenter such as Durometer hardness, Barcol hardness, or Monotron hardness is simple and more preferable.

Furthermore, as a method for measuring the thickness of a support, a known method may be used, and specific preferred examples thereof include noncontact thickness measurement methods such as IR type, laser type, white light spectroscopy, X-ray transmission, and air type, and contact thickness measurement methods such as roll type and slit type. Among them, noncontact thickness measurements such as IR type and laser type are more preferable.

Furthermore, as a method for measuring the stretching ratio or tensile strength of a support, a known method may be used, and specific preferred examples thereof include a method in which the elongation ratio or the strength of a support is measured when one end of the support is fixed and the support is pulled at a constant speed by means of a clamping tool, etc. equipped with a force gauge.

As a method for measuring thermal characteristics, a known method may be used, and preferred examples thereof include a differential scanning calorimetry measurement method, a thermogravimetric measurement method, differential thermal analysis, a thermomechanical measurement method, and a dynamic thermomechanical measurement method.

Among them, detection of the characteristics of a support preferably employs measurement of support hardness and measurement of support thickness in combination.

Furthermore, as a method for detection of the composition of a support used, a known method may be used; preferred examples thereof include an IR absorption spectroscopic method, a near-infrared absorption spectroscopic method, an elemental analysis method, a gas chromatography/mass spectroscopic method, and an X-ray fluorescence analysis method, and more preferred examples thereof include an IR absorption spectroscopic method and a near-infrared absorption spectroscopic method.

Moreover, as the method for detecting the characteristics and/or the composition of a support used, it may be a destructive detection method or a non-destructive detection method, but a non-destructive detection method is preferable.

### Discharge step and curing step

The inkjet recording method of the present invention preferably comprises a discharge step of discharging ink composition A, ink composition B, and/or a mixture of ink composition A and ink composition B onto the support subsequent to the selection step, and a curing step of curing by irradiating with actinic radiation ink composition A, ink composition B, and/or a mixture of ink composition A and ink composition B discharged in the discharge step.

In the discharge step, according to ink composition A or ink composition B or the proportions of ink composition A and ink composition B used selected in the selection step, ink composition A, ink composition B, and/or a mixture of ink composition A and ink composition B is discharged.

In the discharge step, ink composition A and ink composition B may be discharged onto a support via separate inkjet heads or a mixture of ink composition A and ink composition B at predetermined proportions may be discharged onto a support via an inkjet head.

Furthermore, from the viewpoint of the lightness of the ink composition, when ink composition A and ink composition B are mixed, ink composition A and ink composition B are preferably ink compositions of the same color.

In the curing step, ink composition A, ink composition B, and/or a mixture of ink composition A and ink composition B discharged in the discharge step are cured by irradiation with actinic radiation.

In the inkjet recording method of the present invention, the ink composition discharged onto a recording medium (support) is cured by irradiation with actinic radiation. This is due to a polymerization initiator contained in the ink composition being decomposed by irradiation with actinic radiation, thus generating an initiating species such as a radical or a cation, and the initiating species functioning to cause and promote a polymerization reaction of a polymerizable compound. In this process, if a sensitizer is present together with the polymerization initiator in the ink composition, the sensitizer in the system absorbs actinic radiation and attains an excited state, and promotes decomposition of the polymerization initiator by contacting the polymerization initiator, thus enabling a curing reaction at higher sensitivity to be achieved.

In the curing step, curing of ink composition A, ink composition B, and/or a mixture of ink composition A and ink composition B may be carried out separately or simultaneously. Each of the discharged ink compositions may be semi-cured, and all of the discharged ink compositions may be completely cured at the end.

'Semi-curing' means partial curing (partially cured; partial curing), and is a state in which an ink composition is partially cured but not completely cured. When another ink composition discharged on top of an ink composition applied onto a support (substrate) is semi-cured, the degree of curing may be nonuniform. For example, curing of the ink composition preferably advances in the depth direction.

More specifically, when ink composition A and ink composition B are discharged onto a support via separate inkjet heads, with regard to the timing of irradiating with actinic radiation, (1) irradiation may be carried out after imaging using both ink composition A and ink composition B, or (2) irradiation may be carried out after imaging using ink composition A, and irradiation may further be carried out separately after imaging using ink composition B.

When irradiation is carried out by method (2) above, a method in which the intensity of radiation applied after the use of ink composition A is reduced, imaging using ink composition B is carried out before ink composition A has completely cured, and irradiation is then carried out under conditions in which ink composition A and ink composition B are completely cured is more preferable.

Furthermore, in the inkjet recording method of the present invention, ink composition A is usually discharged first, and ink composition B is then discharged onto at least one part of uncured or cured ink composition A, thus giving an image in which the surface layer is a layer of cured ink composition B and a lower layer is a layer of cured ink composition A and thereby enabling an image having excellent flexibility and scratch resistance to be obtained. In addition, when transfer, etc. is carried out and a final surface layer of a printed material is reversed, ink composition B may be discharged first and ink composition A may be discharged subsequently.

When an ink set that can be used in the present invention comprises two or more types of ink composition A and/or ink composition B, or when an ink set that can be used in the present invention comprises an ink composition other than ink composition A and ink composition B, in the inkjet recording method of the present invention it is preferable that at least one type of ink composition A is discharged first and one type of ink composition B is subsequently discharged, and it is more preferable that, for each color ink, composition A and ink composition B are discharged in that order.

As one example of a preferred embodiment of the inkjet recording method of the present invention, there can be cited an inkjet recording method comprising a step of discharging ink composition A onto a support, a step of discharging ink composition B onto at least one part of discharged ink composition A, and a step of curing by irradiating ink composition A and ink composition B with actinic radiation.

Furthermore, as another example of a preferred embodiment of the inkjet recording method of the present invention, there can be cited an inkjet recording method comprising a step of discharging ink composition A onto a support, a step of curing or semi-curing by irradiating ink composition A with actinic radiation, a step of discharging ink composition B onto at least one part of cured or semi-cured ink composition A, and a step of curing by irradiating at least ink composition B with actinic radiation.

In the inkjet recording method of the present invention, the ink composition is preferably discharged after being heated to preferably 25°C to 80°C, and more preferably 25°C to 50°C, so as to reduce the viscosity of the ink composition to preferably 3 to 15 mPa·s, and more preferably 3 to 13 mPa·s. In particular, when the ink composition used is one having a viscosity at 25°C of no greater than 50 mPa·s, discharge can be carried out well. By employing this method, high discharge stability can be realized.

The radiation-curing ink composition generally has a viscosity that is higher than that of a water-based ink composition normally used for an inkjet recording ink composition, and variation in viscosity due to change in temperature at the time of discharge is large. Viscosity variation in the ink composition has a large effect on changes in liquid droplet size and changes in liquid droplet discharge speed and, consequently, causes the image quality to be degraded. It is therefore necessary to maintain the ink composition discharge temperature as constant as possible. In the present invention, it is desirable that the control range for the temperature of the ink composition is preferably ±5°C of a set temperature, more preferably ±2°C of the set temperature, and yet more preferably ±1°C of the set temperature.

The actinic radiation used in this process may include α rays, γ rays, an electron beam, X rays, UV rays, visible light, and IR rays. Although it depends on the absorption characteristics of the sensitizer, the peak wavelength of the actinic radiation is, for example, preferably 200 to 600 nm, more preferably 300 to 450 nm, and yet more preferably 350 to 420 nm.

Furthermore, the polymerization initiation system of the ink composition has sufficient sensitivity for low output actinic radiation. Therefore, the illumination intensity on the exposed surface is preferably 10 to 4,000 mW/cm², and more preferably 20 to 2,500 mW/cm².

As an actinic radiation source, a mercury lamp, a gas/solid laser, etc. are mainly used, and as a light source used for curing a UV photocuring inkjet recording ink, a mercury lamp and a metal halide lamp are widely known. However, from the viewpoint of protection of the environment, there has recently been a strong desire for mercury not to be used, and replacement by a GaN semiconductor UV light emitting device is very useful from industrial and environmental viewpoints. Furthermore, LEDs (UV-LED) and LDs (UV-LD) have small dimensions, long life, high efficiency, and low cost, and their use as a photocuring inkjet light source can be expected.

Furthermore, light-emitting diodes (LED) and laser diodes (LD) may be used as the source of actinic radiation. In particular, when a UV ray source is needed, a UV-LED or a UV-LD may be used. For example, Nichia Corporation has marketed a violet LED having a wavelength of the main emission spectrum of between 365 nm and 420 nm. Furthermore, when a shorter wavelength is needed, as an LED, an LED that can emit actinic radiation whose wavelength is centered between 300 nm and 370 nm, disclosed in US Pat. No. 6,084,250, can be cited. Furthermore, another violet LED is available, and irradiation can be carried out with radiation of a different UV bandwidth. The actinic radiation source in the present invention is particularly preferably a UV-LED, and a UV-LED having a peak wavelength at 350 to 420 nm is particularly preferable.

The maximum illumination intensity of the LED on a support is preferably 10 to 2,000 mW/cm², more preferably 20 to 1,000 mW/cm², and particularly preferably 50 to 800 mW/cm².

In the inkjet recording method of the present invention, the ink composition of the present invention is desirably exposed to such actinic radiation for preferably 0.01 to 120 sec., and more preferably 0.1 to 90 sec.

Irradiation conditions and a basic method for irradiation with actinic radiation are disclosed in JP-A-60-132767. Specifically, irradiation with actinic radiation is carried out after a certain time (preferably 0.01 to 0.5 sec., more preferably 0.01 to 0.3 sec., and yet more preferably 0.01 to 0.15 sec.) has elapsed from when the ink composition has landed. By controlling the time from ink composition landing to irradiation so as to be a minimum in this way, it becomes possible to prevent the ink composition that has landed on a support from spreading before being cured. Furthermore, since the ink composition can be exposed before it reaches a deep area of a porous support that the light source cannot reach, it is possible to prevent monomer from remaining unreacted, which is preferable.

Furthermore, curing may be completed using another light source that is not driven. WO99/54415 discloses, as an irradiation method, a method employing an optical fiber and a method in which a collimated light source is incident on a mirror surface provided on a head unit side face, and a recorded area is irradiated with UV light, and such a curing method can also be applied to the inkjet recording method of the present invention.

By employing such a method, it is possible to maintain a uniform dot diameter for the landed ink composition even for various types of supports having different surface wettability, thereby improving the image quality. In order to obtain a color image, it is preferable to superimpose colors in order from those with a low lightness. By superimposing ink compositions in order from one with low lightness, it is easy for radiation to reach a lower ink composition, the curing sensitivity is good, the amount of residual monomer decreases, and an improvement in adhesion can be expected. Furthermore, although it is possible to discharge all colors and then expose them at the same time, it is preferable to expose one color at a time from the viewpoint of promoting curing.

The order in which colored link compositions are discharged is not particularly limited, but it is preferable to start application to a support from a colored ink composition having a low lightness; when as ink compositions yellow, cyan, magenta, and black ink compositions are used, they are preferably applied on top of the support in the order yellow → cyan → magenta → black. Furthermore, when white is additionally used, they are preferably applied on top of the support in the order yellow → cyan → magenta → black → white. Moreover, when a clear ink composition is additionally used, they are preferably applied on top of the support in the order yellow → cyan → magenta → black → white → clear. When an ink set comprising at least seven colors, that is, light cyan and light magenta ink compositions and cyan, magenta, black, white, and yellow dark color ink compositions is used, they are preferably applied on top of the support in the order light cyan → light magenta → yellow → cyan → magenta → black → white.

In particular, when a color image is printed using a transparent support as a support, by discharging a white ink composition after a reversed image is color-printed, the contrast of the color image is enhanced when viewed from the transparent support side (the side opposite to the printed side), and it is therefore preferable to discharge a white ink composition after color ink compositions such as yellow, cyan, magenta, and black.

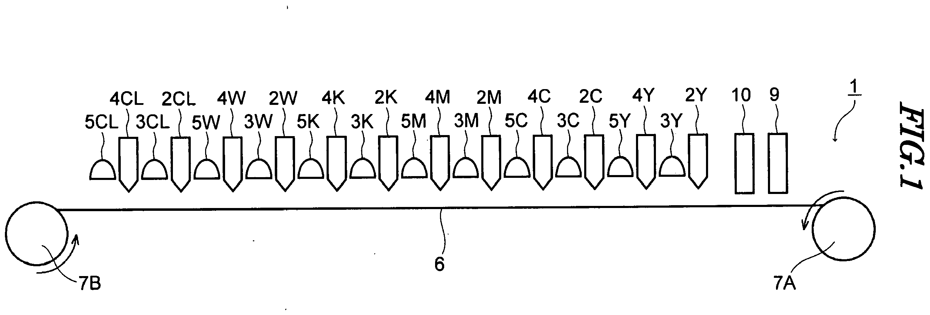

For example, the inkjet recording method of the present invention may suitably be carried out by use of an inkjet recording system shown in FIG. 1.

FIG. 1 is a schematic diagram showing one example of an inkjet recording system that can be used suitably in the inkjet recording method of the present invention. A detailed explanation is given below by reference to FIG. 1.

A support (not illustrated) is transported by a transport conveyor 6 and recording medium transport means 7A and 7B, and is transported in the right to left direction in FIG. 1. A hardness measurement detector 9 for measuring the hardness of the support and a film thickness measurement detector 10 for measuring the thickness of the support are installed in a first section in the transport direction.

The support and the support transport means are not particularly limited; in the present embodiment shown in FIG. 1 a plastic film is used as the support, and as the support transport means the transport conveyor 6, a film unwinding machine (7A), and a film winding machine (7B) are used.

In a first step, the hardness of the support on the transport conveyor 6 is measured by the hardness measurement detector 9.

In a second step, the thickness of the support on the transport conveyor 6 is measured by the film thickness measurement detector 10.

In a third step, data obtained in the first step and the second step are fed to a data processing section (not illustrated), in the data processing section ink compositions to be used in the following steps are selected according to the hardness and thickness of the support, and the selection results are fed to a discharge control section (not illustrated).

In a fourth step, a color image is formed by means 2Y for applying a yellow ink composition A onto the support. In FIG. 1, the yellow ink composition A is applied to thus form a yellow image. As means 2Y for applying the yellow ink composition A, a yellow inkjet recording head can be cited, and a piezo type yellow inkjet head can be cited as a preferred example.

In a fifth step, the yellow ink composition A is cured or semi-cured by means 3Y for exposing to light the yellow ink composition A applied in the fourth step. In FIG. 1, as means for exposing to light the yellow ink composition A, a UV light source is used, and the yellow ink composition A applied onto the support is cured or semi-cured.

In a sixth step, a yellow ink composition B is applied by means 4Y for applying the yellow ink composition B onto the coating of yellow ink composition A cured or semi-cured on the support, thus forming a yellow image. As means 4Y for applying the yellow ink composition B, a yellow inkjet recording head can be cited, and a piezo type yellow inkjet head can be cited as a preferred example.

In a seventh step, the yellow ink composition B applied in the sixth step is cured or semi-cured. In FIG. 1, as means 5Y for exposing to light the yellow ink composition B, a UV light source is used, and the yellow ink composition B applied onto the coating of yellow ink composition A is cured or semi-cured.

Similarly, in an eighth step, a cyan image is formed on the support or the coating of either yellow ink composition A or B (preferably, immediately above the support or the coating of yellow ink composition B) by means 2C for applying a cyan ink composition A, and then in a ninth step the applied cyan ink composition A is cured or semi-cured by means 3C for exposing to light the cyan ink composition A. In a tenth step, a cyan ink composition B is applied by means 4C for applying the cyan ink composition B, thus forming a cyan image. In an eleventh step, the cyan ink composition B applied onto the coating of cyan ink composition A is cured or semi-cured by means 5C for exposing to light the cyan ink composition B.

Furthermore, similarly, in a twelfth step, a magenta image is formed on the support or the coating of either yellow ink composition A or B or cyan ink composition A or B (preferably immediately above the support or the coating of either yellow ink composition B or cyan ink composition B) by means 2M for applying a magenta ink composition A, and then in a thirteenth step the applied magenta ink composition A is cured or semi-cured by means 3M for exposing to light the magenta ink composition A. In a fourteenth step, a magenta ink composition B is applied by means 4M for applying the magenta ink composition B, thus forming a magenta image. In a fifteenth step, the magenta ink composition B applied onto the coating of magenta ink composition A is cured or semi-cured by means 5M for exposing to light the magenta ink composition B.

Furthermore, similarly, in a sixteenth step, a black image is formed on the support or the coating of either yellow ink composition A or B, cyan ink composition A or B, or magenta ink composition A or B (preferably immediately above the support or the coating of either yellow ink composition B, cyan ink composition B, or magenta ink composition B) by means 2K for applying a black ink composition A, and then in a seventeenth step, the applied black ink composition A is cured or semi-cured by means 3K for exposing to light the black ink composition A. In an eighteenth step, a black ink composition B is applied by means 4K for applying the black ink composition B, thus forming a black image. In a nineteenth step, the black ink composition B applied onto the coating of black ink composition A is cured or semi-cured by means 5K for exposing to light the black ink composition B.

Furthermore, similarly, in a twentieth step, a white image is formed on the support or the coating of either yellow ink composition A or B, cyan ink composition A or B, magenta ink composition A or B, or black ink composition A or B (preferably immediately above the support or the coating of either yellow ink composition B, cyan ink composition B, magenta ink composition B, or black ink composition B) by means 2W for applying a white ink composition A, and then in a twenty-first step, the applied white ink composition A is cured or semi-cured by means 3W for exposing to light the white ink composition A. In a twenty-second step, a white ink composition B is applied by means 4W for applying the white ink composition B, thus forming a white image. In a twenty-third step, the white ink composition B applied onto the coating of white ink composition A is cured or semi-cured by means 5W for exposing to light the white ink composition B.

Furthermore, similarly, in a twenty-fourth step a clear composition A layer is formed on the support or the coating of either yellow ink composition A or B, cyan ink composition A or B, magenta ink composition A or B, black ink composition A or B, or white ink composition A or B (preferably immediately above the support or the coating of either yellow ink composition B, cyan ink composition B, magenta ink composition B, black ink composition B, or white ink composition B) by means 2CL for applying the clear ink composition A, and then in a twenty-fifth step the applied clear ink composition A is cured or semi-cured by means 3CL for exposing to light the clear ink composition A. In a twenty-sixth step, a clear ink composition B is applied by means 4CL for applying the clear ink composition B, thus forming a clear composition B layer. In a twenty-seventh step, the clear ink composition B applied onto the coating of clear ink composition A is cured or semi-cured by means 5CL for exposing to light the clear ink composition B.

When an ink composition is semi-cured in the above steps, subsequently, in a twenty-eighth step, a full color image formed is completely cured by means (not illustrated) for completely curing the full color image. Furthermore, when an image is formed using a cationically polymerizable ink composition, the relative humidity of air in a region in which the image is completely cured is preferably regulated so as to be no greater than 30% by a precision air conditioning unit. It is possible to omit the twenty-seventh step, and in this case the support onto which the final white ink composition B has been applied may be completely cured without undergoing the semi-curing step.

Prior to the fourth step, an undercoat layer may be provided above the support by a known method.

Furthermore, after an image is formed by ink compositions A and B, an overcoat layer may further be provided by a known method. The undercoat layer and the overcoat layer may be formed over the whole face of the support or may be formed only in an area where a color image is formed, and may be formed as appropriate in a desired area.

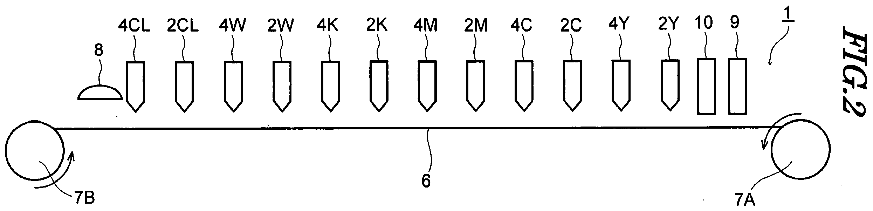

Furthermore, for example, the inkjet recording method of the present invention may be carried out suitably using an inkjet recording system shown in FIG. 2.

FIG. 2 is a schematic diagram showing another example of an inkjet recording system that can suitably be used in the inkjet recording method of the present invention.

After the first step to the third step are carried out and even numbered steps after the fourth step are carried out, that is, after yellow, cyan, magenta, black, white, and clear ink compositions A and B are applied onto a support, a full color image formed is completely cured by means 8 for completely curing the full color image formed. When an image is formed using a cationically polymerizable ink composition, the relative humidity of air in a region in which the image is completely cured is preferably regulated so as to be no greater than 30% by a precision air conditioning unit.

### Inkjet recording system

The inkjet recording system of the present invention comprises an ink set comprising at least ink composition A comprising (a-1) a polymerization initiator and (b-1) a polymerizable compound, at least 65 wt % of the total weight of the polymerizable compound (b-1) being a monofunctional polymerizable compound, and ink composition B comprising (a-2) a polymerization initiator and (b-2) a polymerizable compound, at least 50 wt % of the total weight of the polymerizable compound (b-2) being a polyfunctional polymerizable compound; and selection means for selecting, as an ink composition used, ink composition A, ink composition B, or the proportions of ink composition A and ink composition B used according to the characteristics and/or the composition of a support used.

The inkjet recording system of the present invention may be used in the inkjet recording method of the present invention.

As an ink set that can be used in the inkjet recording system of the present invention, ink sets described later can be cited as preferred examples.

The selection means is not particularly limited as long as it is possible to select as an ink composition used, according to the characteristics and/or the composition of a support used, ink composition A or ink composition B, or the proportions of ink composition A and ink composition B used, and examples thereof include means in which the type, hardness, thickness, composition, etc. of a support are inputted and reflected in the discharge of each ink composition, and means in which detection data fed from detection means for detecting the hardness or thickness of a support, described later, are reflected in the discharge of each ink composition.

The inkjet recording system of the present invention preferably comprises means for detecting the characteristics and/or the composition of a support used.

As means for detecting the characteristics of a support, known means may be used, and means that can carry out the above-mentioned measurement method is preferably used.

Furthermore, the inkjet recording system of the present invention more preferably comprises means for measuring the hardness of a support and means for measuring the thickness of a support.

As a method for measuring the composition of a support, known means may be used, and means that can carry out the above-mentioned measurement method is preferably used.

The inkjet recording system of the present invention preferably comprises an ink composition supply system and an actinic radiation source. Furthermore, the inkjet recording system of the present invention preferably comprises transport means for a support.

The ink composition supply system comprises, for example, a main tank containing an ink composition, a supply pipe, an ink composition supply tank immediately before an inkjet head, a filter, and a piezo type inkjet head. The piezo type inkjet head may be driven so as to discharge multisize dots of preferably 1 to 100 pL, and more preferably 8 to 30 pL, at a resolution of preferably 320 x 320 to 4,000 x 4,000 dpi, more preferably 400 x 400 to 1,600 x 1,600 dpi, and yet more preferably 720 x 720 dpi. Here, dpi referred to in the present invention means the number of dots per 2.54 cm.

For example, inkjet recording systems shown in FIG. 1 and FIG. 2 can be cited as preferred examples.

Since it is desirable for the radiation-curing ink composition to be discharged at a constant temperature, a section from the ink composition supply tank to the inkjet head is thermally insulated and heated.

A method of controlling temperature is not particularly limited, but it is preferable to provide, for example, temperature sensors at a plurality of pipe section positions, and control heating according to the ink composition flow rate and the temperature of the surroundings. The temperature sensors may be provided on the ink composition supply tank and in the vicinity of the inkjet head nozzle. Furthermore, the head unit that is to be heated is preferably thermally shielded or insulated so that the system main body is not influenced by the temperature of the outside air. In order to reduce the printer start-up time required for heating, or in order to reduce the thermal energy loss, it is preferable to thermally insulate the head unit from other sections and also to reduce the heat capacity of the entire heated unit.

### Ink set

An ink set that can be used in the present invention comprises at least ink composition A comprising (a-1) a polymerization initiator and (b-1) a polymerizable compound, at least 65 wt % of the total weight of the polymerizable compound (b-1) being a monofunctional polymerizable compound, and ink composition B comprising (a-2) a polymerization initiator and (b-2) a polymerizable compound, at least 50 wt % of the total weight of the polymerizable compound (b-2) being a polyfunctional polymerizable compound.

The ink set that can be used in the present invention may suitably be used as an inkjet recording ink set.

There is a demand for a radiation-curing ink composition to cure at high sensitivity in order to form an image with high image quality.

By achieving high sensitivity for the ink composition, high curability upon exposure to actinic radiation can be imparted, and there are therefore provided various benefits such as a reduction in power consumption, a longer lifetime of an actinic radiation generator due to a decrease in the load thereon, and suppression of evaporation of uncured low-molecular-weight material and of a reduction in the strength of an image formed. There is also a desire for an ink composition that gives an image (printed material) that is resistant to cracking, peeling-off, etc., and gives a cured coating that has excellent scratch resistance and flexibility. A cured coating having high flexibility and scratch resistance enables a printed material to be displayed and stored for a long period of time in various environments while maintaining high image quality, and also has advantages such as ease of handling of the printed material.

Ink composition A comprises (a-1) a polymerization initiator and (b-1) a polymerizable compound, and of the total weight of polymerizable compound (b-1), a monofunctional polymerizable compound (hereinafter, also called a 'monofunctional monomer') is at least 65 wt %.

Ink composition B comprises (a-2) a polymerization initiator and (b-2) a polymerizable compound, and of the total weight of polymerizable compound (b-2), a polyfunctional polymerizable compound (hereinafter, also called a 'polyfunctional monomer') is at least 50 wt %.

In the ink composition, the proportion by weight of the monofunctional polymerizable compound relative to the total weight of polymerizable compounds in the ink composition is also called the 'monofunctional monomer proportion', and the proportion by weight of the polyfunctional polymerizable compound relative to the total weight of polymerizable compounds in the ink composition is also called the 'polyfunctional monomer proportion'. The monofunctional monomer proportion (%) and the polyfunctional monomer proportion (%) in the present invention are values rounded off to the nearest integer.

The ink composition in the present invention is curable upon exposure to actinic radiation.

The 'actinic radiation' referred to in the present invention is not particularly limited as long as it is actinic radiation that can provide energy that enables an initiating species to be generated in the ink composition when irradiated, and broadly includes α rays, γ rays, X rays, UV rays, visible light, and an electron beam; among these, UV rays and an electron beam are preferable from the viewpoint of curing sensitivity and the availability of equipment, and UV rays are particularly preferable. The ink composition of the present invention is therefore preferably an ink composition that is curable upon exposure to UV rays as radiation.

The components are each explained below.

### (a) Polymerization initiator

As a polymerization initiator that can be used in the present invention, a known radical polymerization initiator and a known cationic polymerization initiator may be used. The polymerization initiator that can be used in the present invention may be used singly or in a combination of two or more types. Furthermore, the radical polymerization initiator may be used in combination with a cationic polymerization initiator.

The polymerization initiator that can be used in the ink composition of the present invention is a compound that forms a polymerization initiating species by absorbing external energy. The external energy used for initiating polymerization can be broadly divided into heat and actinic radiation, and a thermal polymerization initiator and a photopolymerization initiator are used respectively. Examples of the actinic radiation include γ rays, β rays, an electron beam, ultraviolet rays, visible light, and infrared rays.

The ink composition of the present invention preferably comprises a radical polymerization initiator when using a radically polymerizable compound as a polymerizable compound, and preferably comprises a cationic polymerization initiator when using a cationically polymerizable compound as a polymerizable compound.

### Radical polymerization initiator

Examples of the radical polymerization initiator that can be used in the present invention include (a-a) an aromatic ketone, (a-b) an acylphosphine compound, (a-c) an aromatic onium salt compound, (a-d) an organic peroxide, (a-e) a thio compound, (a-f) a hexaarylbiimidazole compound, (a-g) a ketoxime ester compound, (a-h) a borate compound, (a-i) an azinium compound, (a-j) a metallocene compound, (a-k) an active ester compound, (a-l) a compound having a carbon-halogen bond, and (a-m) an alkylamine compound. With regard to these radical polymerization initiators, the above-mentioned compounds (a-a) to (a-m) may be used singly or in combination. The radical polymerization initiator in the present invention may suitably be used singly or in a combination of two or more types.

Preferred examples of the aromatic ketone (a-a) and the thio compound (a-e) include a compound having a benzophenone skeleton (benzophenone compound) or a compound having a thioxanthone skeleton (thioxanthone compound) described in 'RADIATION CURING IN POLYMER SCIENCE AND TECHNOLOGY' J. P. FOUASSIER J. F. RABEK (1993), pp. 77 to 117. Preferred examples of the aromatic ketone (a-a), the acylphosphine compound (a-b) and the thio compound (a-e) include an α-thiobenzophenone compound described in JP-B-47-6416, a benzoin ether compound described in JP-B-47-3981, an α-substituted benzoin compound described in JP-B-47-22326, a benzoin derivative described in JP-B-47-23664, an aroylphosphonic acid ester described in JP-A-57-30704, a dialkoxybenzophenone described in JP-B-60-26483, benzoin ethers described in JP-B-60-26403 and JP-A-62-81345, α-aminobenzophenones described in JP-B-1-34242, US Pat. No. 4,318,791, and EP No. 0284561A1, *p*-di(dimethylaminobenzoyl)benzene described in JP-A-2-211452, a thio-substituted aromatic ketone described in JP-A-61-194062, an acylphosphine sulfide described in JP-B-2-9597, an acylphosphine described in JP-B-2-9596, a thioxanthone described in JP-B-63-61950, and a coumarin described in JP-B-59-42864.

Examples of the benzophenone compound include benzophenone, 4-phenylbenzophenone, isophthalophenone, and 4-benzoyl-4'-methylphenylsulfide. Examples of the thioxanthone compound include 2,4-diethylthioxanthone, 2-isopropylthioxanthone, and 2-chlorothioxanthone.

In the present invention, the aromatic ketone (a-a) is preferably an α-hydroxyketone, and examples thereof include 1-[4-(2-hydroxyethoxy)phenyl]-2-hydroxy-2-methyl-1-propan-1-one, 2-hydroxy-2-methyl-1-phenylpropan-1-one, and 1-hydroxycyclohexyl phenyl ketone.

Among them, the aromatic ketone (a-a) is particularly preferably a 1-hydroxycyclohexyl phenyl ketone compound. The 1-hydroxycyclohexyl phenyl ketone compound referred to in the present invention means 1-hydroxycyclohexyl phenyl ketone and a compound obtained by substituting 1-hydroxycyclohexyl phenyl ketone with any substituent. The substituent may be selected freely from a range that enables an ability as a radical polymerization initiator to be exhibited, and specific examples thereof include an alkyl group (e.g. a methyl group, an ethyl group, a propyl group, a butyl group, etc.).

In the present invention, the acylphosphine compound (a-b) is preferably an acylphosphine oxide compound.

Examples of the acylphosphine oxide compound include a compound having a structure represented by Formula (b-1) or (b-2).

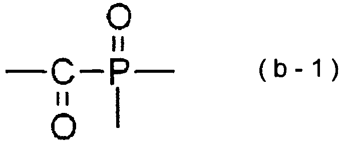

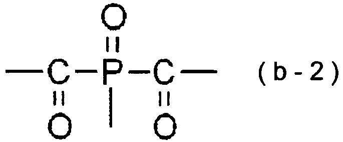

The acylphosphine oxide compound is particularly preferably one having a chemical structure represented by Formula (b-3) or (b-4). 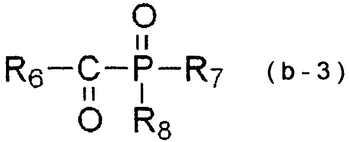 (In the formulae, R₆, R₇, and R₈ denote an aromatic hydrocarbon group, which may have a methyl group or an ethyl group as a substituent.) 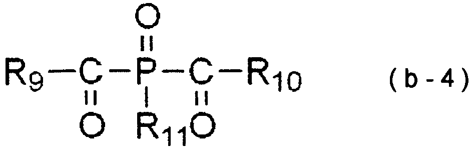 (In the formulae, R₉, R₁₀, and R₁₁ denote an aromatic hydrocarbon group, which may have a methyl group or an ethyl group as a substituent.)

As the acylphosphine oxide compound, a monoacylphosphine oxide compound, a bisacylphosphine oxide compound, etc. may be used, and as the monoacylphosphine oxide compound, a known monoacylphosphine oxide compound may be used. Examples thereof include monoacylphosphine oxide compounds described in JP-B-60-8047 and JP-B-63-40799. Specific examples thereof include methyl isobutyrylmethylphosphinate, methyl isobutyrylphenylphosphinate, methyl pivaloylphenylphosphinate, methyl 2-ethylhexanoylphenylphosphinate, isopropyl pivaloylphenylphosphinate, methyl p-tolylphenylphosphinate, methyl o-tolylphenylphosphinate, methyl 2,4-dimethylbenzoylphenylphosphinate, isopropyl p-t-butylbenzoylphenylphosphinate, methyl acryloylphenylphosphinate, isobutyryldiphenylphosphine oxide, 2-ethylhexanoyldiphenylphosphine oxide, o-tolyldiphenylphosphine oxide, p-t-butylbenzoyldiphenylphosphine oxide, 3-pyridylcarbonyldiphenylphosphine oxide, acryloyldiphenylphosphine oxide, benzoyldiphenylphosphine oxide, vinyl pivaloylphenylphosphinate, adipoyl-bis-diphenylphosphine oxide, pivaloyldiphenylphosphine oxide, p-tolyldiphenylphosphine oxide, 4-(t-butyl)benzoyldiphenylphosphine oxide, terephthaloyl-bis-diphenylphosphine oxide, 2-methylbenzoyldiphenylphosphine oxide, versatoyldiphenylphosphine oxide, 2-methyl-2-ethylhexanoyldiphenylphosphine oxide, 1-methylcyclohexanoyldiphenylphosphine oxide, methyl pivaloylphenylphosphinate, and isopropyl pivaloylphenylphosphinate.

As the bisacylphosphine oxide compound, a known bisacylphosphine oxide compound may be used. Examples thereof include bisacylphosphine oxide compounds described in JP-A-3-101686, JP-A-5-345790, and JP-A-6-298818. Specific examples thereof include bis(2,6-dichlorobenzoyl)phenylphosphine oxide, bis(2,6-dichlorobenzoyl)-2,5-dimethylphenylphosphine oxide, bis(2,6-dichlorobenzoyl)-4-ethoxyphenylphosphine oxide, bis(2,6-dichlorobenzoyl)-4-propylphenylphosphine oxide, bis(2,6-dichlorobenzoyl)-2-naphthylphosphine oxide, bis(2,6-dichlorobenzoyl)-1-naphthylphosphine oxide, bis(2,6-dichlorobenzoyl)-4-chlorophenylphosphine oxide, bis(2,6-dichlorobenzoyl)-2,4-dimethoxyphenylphosphine oxide, bis(2,6-dichlorobenzoyl)decylphosphine oxide, bis(2,6-dichlorobenzoyl)-4-octylphenylphosphine oxide, bis(2,4,6-trimethylbenzoyl)phenylphosphine oxide, bis(2,4,6-trimethylbenzoyl)-2,5-' dimethylphenylphosphine oxide, bis(2,6-dichloro-3,4,5-trimethoxybenzoyl)-2,5-dimethylphenylphosphine oxide, bis(2,6-dichloro-3,4,5-trimethoxybenzoyl)-4-ethoxyphenylphosphine oxide, bis(2-methyl-1-naphthoyl)-2,5-dimethylphenylphosphine oxide, bis(2-methyl-1-naphthoyl)-4-ethoxyphenylphosphine oxide, bis(2-methyl-1-naphthoyl)-2-naphthylphosphine oxide, bis(2-methyl-1-naphthoyl)-4-propylphenylphosphine oxide, bis(2-methyl-1-naphthoyl)-2,5-dimethylphenylphosphine oxide, bis(2-methoxy-1-naphthoyl)-4-ethoxyphenylphosphine oxide, bis(2-chloro-1-naphthoyl)-2,5-dimethylphenylphosphine oxide, and bis(2,6-dimethoxybenzoyl)-2,4,4-trimethylpentylphosphine oxide.

Among them, preferred examples of the acylphosphine oxide compound in the present invention include bis(2,4,6-trimethylbenzoyl)phenylphosphine oxide (IRGACURE 819: manufactured by Ciba Specialty Chemicals), bis(2,6-dimethoxybenzoyl)-2,4,4-trimethylpentylphenylphosphine oxide, and 2,4,6-trimethylbenzoyldiphenylphosphine oxide (Darocur TPO: manufactured by Ciba Specialty Chemicals, Lucirin TPO: manufactured by BASF).

As the aromatic onium salt compound (a-c), there can be cited aromatic onium salts of elements of Groups 15, 16, and 17 of the periodic table, specifically, N, P, As, Sb, Bi, O, S, Se, Te, and I. Examples thereof include iodonium salts described in EP No. 104143, US Pat. No. 4837124, JP-A-2-150848, and JP-A-2-96514, diazonium salts (optionally substituted benzenediazoniums, etc.) described in EP Nos. 370693, 233567, 297443, 297442, 279210, and 422570, US Pat. Nos. 3902144, 4933377, 4760013, 4734444, and 2833827, diazonium salt resins (diazodiphenylamine formaldehyde resins, etc.), N-alkoxypyridinium salts, etc. (e.g. those described in US Pat. No. 4,743,528, JP-A-63-138345, JP-A-63-142345, JP-A-63-142346, and JP-B-46-42363; specific examples thereof include 1-methoxy-4-phenylpyridinium tetrafluoroborate); furthermore, compounds described in JP-B-52-147277, 52-14278, and 52-14279 may suitably be used. A radical or an acid is formed as an active species.

As the organic peroxide (a-d), almost all organic compounds having at least one oxygen-oxygen bond per molecule can be cited, and preferred examples thereof include peroxide ester compounds such as 3,3',4,4'-tetra(t-butylperoxycarbonyl)benzophenone, 3,3',4,4'-tetra(t-amylperoxycarbonyl)benzophenone, 3,3',4,4'-tetra(t-hexylperoxycarbonyl)benzophenone, 3,3',4,4'-tetra(t-octylperoxycarbonyl)benzophenone, 3,3',4,4'-tetra(cumylperoxycarbonyl)benzophenone, 3,3',4,4'-tetra(p-isopropylcumylperoxycarbonyl)benzophenone, and di-t-butyldiperoxyisophthalate.

As the hexaarylbiimidazole compound (a-f), there can be cited lophine dimers described in JP-B-45-37377 and JP-B-44-86516, and examples thereof include 2,2'-bis(o-chlorophenyl)-4,4',5,5'-tetraphenylbiimidazole, 2,2'-bis(o-bromophenyl)-4,4',5,5'-tetraphenylbiimidazole, 2,2'-bis(o,p-dichlorophenyl)-4,4',5,5'-tetraphenylbiimidazole, 2,2'-bis(o-chlorophenyl)-4,4',5,5'-tetra(m-methoxyphenyl)biimidazole, 2,2'-bis(o,o'-dichlorophenyl)-4,4',5,5'-tetraphenylbiimidazole, 2,2'-bis(o-nitrophenyl)-4,4',5,5'-tetraphenylbiimidazole, 2,2'-bis(o-methylphenyl)-4,4',5,5'-tetraphenylbiimidazole, and 2,2'-bis(o-trifluorophenyl)-4,4',5,5'-tetraphenylbiimidazole.

As the ketoxime ester compound (a-g), there can be cited 3-benzoyloxyiminobutan-2-one, 3-acetoxyiminobutan-2-one, 3-propionyloxyiminobutan-2-one, 2-acetoxyiminopentan-3-one, 2-acetoxyimino-1-phenylpropan-1-one, 2-benzoyloxyimino-1-phenylpropan-1-one, 3-p-toluenesulfonyloxyiminobutan-2-one, and 2-ethoxycarbonyloxyimino-1-phenylpropan-1-one.

Examples of the borate compound (a-h) include compounds described in US Pat. Nos. 3,567,453 and 4,343,891, and EP Nos. 109,772 and 109,773.

Examples of the azinium compound (a-i) include N-O bond-containing compounds described in JP-A-63-138345, JP-A-63-142345, JP-A-63-142346, JP-A-63-143537, and JP-B-46-42363.

Examples of the metallocene compound (a-j) include titanocene compounds described in JP-A-59-152396, JP-A-61-151197, JP-A-63-41484, JP-A-2-249, and JP-A-2-4705, and iron-arene complexes described JP-A-1-304453 and JP-A-1-152109.

Specific examples of the titanocene compound include dicyclopentadienyl-Ti-dichloride, dicyclopentadienyl-Ti-bis-phenyl, dicyclopentadienyl-Ti-bis-2,3,4,5,6-pentafluorophen-1-yl, dicyclopentadienyl-Ti-bis-2,3,5,6-tetrafluorophen-1-yl, dicyclopentadienyl-Ti-bis-2,4,6-trifluorophen-1-yl, dicyclopentadienyl-Ti-2,6-difluorophen-1-yl, dicyclopentadienyl-Ti-bis-2,4-difluorophen-1-yl, dimethylcyclopentadienyl-Ti-bis-2,3,4,5,6-pentafluorophen-1-yl, dimethylcyclopentadienyl-Ti-bis-2,3,5,6-tetrafluorophen-1-yl, dimethylcyclopentadienyl-Ti-bis-2,4-difluorophen-1-yl, bis(cyclopentadienyl)bis(2,6-difluoro-3-(pyrr-1-yl)phenyl)titanium, bis(cyclopentadienyl)bis[2,6-difluoro-3-(methylsulfonamido)phenyl]titanium, and bis(cyclopentadienyl)bis[2,6-difluoro-3-(N-butylbiaroylamino)phenyl]titanium.

Examples of the active ester compound (a-k) include nitrobenzyl ester compounds described in EP Nos. 0290750, 046083, 156153, 271851, and 0388343, US Pat. Nos. 3901710 and 4181531, JP-A-60-198538, and JP-A-53-133022, iminosulfonate compounds described in EP Nos. 0199672, 84515, 199672, 044115, and 0101122, US Pat. Nos. 4618564, 4371605, and 4431774, JP-A-64-18143, JP-A-2-245756, and JP-A-4-365048, and compounds described in JP-B-62-6223, JP-B-63-14340, and JP-A-59-174831.

Preferred examples of the compound (a-l) having a carbon-halogen bond include a compound described in Wakabayashi et. al, Bull. Chem. Soc. Japan, 42, 2924 (1969), a compound described in British Patent No. 1388492, a compound described in JP-A-53-133428, and a compound described in German Patent No. 3337024.

Examples further include a compound described in F. C. Schaefer et al., J. Org. Chem., 29, 1527 (1964), a compound described in JP-A-62-58241, a compound described in JP-A-5-281728, a compound described in German Pat. No. 2641100, a compound described in German Pat. No. 3333450, compounds described in German Pat. No. 3021590, and compounds described in German Pat. No. 3021599.

The ink composition of the present invention preferably comprises an acylphosphine oxide compound; it is preferable to use in combination an acylphosphine compound and a benzophenone compound or thioxanthone compound, and it is more preferable to use in combination an acylphosphine compound and an α-aminoketone compound. It is particularly preferable to use in combination an acylphosphine compound and a benzophenone compound. Due to the above-mentioned combination, an ink composition having excellent curability and anti-blocking properties can be obtained.

### Cationic Polymerization initiator

Examples of the cationic polymerization initiator (photo-acid generator) that can be used in the present invention include chemically amplified photoresists and compounds used in cationic photopolymerization ('Imejingu you Yukizairyou' (Organic Materials for Imaging), Ed. The Japanese Research Association for Organic Electronics Materials, Bunshin Publishing Co. (1993), pp. 187-192).

Firstly, B(C₆F₅)₄⁻, PF₆⁻, AsF₆⁻, SbF₆⁻, and CF₃SO₃⁻ salts of diazonium, ammonium, iodonium, sulfonium, phosphonium, etc. aromatic onium compounds can be cited. Secondly, sulfonated materials that generate a sulfonic acid can be cited. Thirdly, halides that photogenerate a hydrogen halide can also be used. Fourthly, iron arene complexes can be cited.

In the ink composition of the present invention, the total amount of polymerization initiator used is preferably 0.01 to 35 wt % relative to the total amount of polymerizable compound used, more preferably 0.5 to 20 wt %, and yet more preferably 1.0 to 20 wt %. The ink composition can be cured sufficiently with 0.01 wt % or greater of the polymerization initiator, and a cured film having a uniform degree of curing can be obtained with 35 wt % or less.

Furthermore, when a sensitizer, which will be described later, is used in the ink composition of the present invention, the total amount of polymerization initiator used is preferably 200:1 to 1:200 relative to the sensitizer as a ratio by weight of polymerization initiator : sensitizer, more preferably 50:1 to 1:50, and yet more preferably 20:1 to 1:5.

### (b) Polymerizable compound

The ink composition in the present invention comprises a polymerizable compound.

The polymerizable compound preferably has a molecular weight of no greater than 1,000, more preferably 50 to 800, and yet more preferably 60 to 500.

Furthermore, the polymerizable compound is not particularly limited as long as it is a compound that undergoes a polymerization reaction such as a radical polymerization reaction, a cationic polymerization reaction, or an anionic polymerization reaction as a result of application of any type of energy, and cures; any of a monomer, an oligomer, and a polymer may be used, but various types of known polymerizable monomers known as photopolymerizable compounds in which a polymerization reaction is caused by an initiating species generated from the polymerization initiator are particularly preferably used.

Preferred examples of the polymerizable compound that can be used in the present invention include a radically polymerizable compound and a cationically polymerizable compound.

### Radically polymerizable compound

The radically polymerizable compound is not particularly limited, and a known radically polymerizable compound may be used; an ethylenically unsaturated compound is preferable, a (meth)acrylate compound, a (meth)acrylamide compound, an *N*-vinyl compound, and/or a vinyl ether compound are more preferable, and a (meth)acrylate compound and/or an *N-*vinyl compound are yet more preferable. In the present invention, '(meth)acrylic' means acrylic and/or methacrylic.

When a radically polymerizable compound is used in ink composition A, with regard to ink composition A, of the total weight of polymerizable compound (b-1), 67 to 100 wt % is preferably a monofunctional radically polymerizable compound, more preferably 70 to 100 wt %, and yet more preferably 85 to 95 wt %. When in the above-mentioned range, an image obtained has excellent flexibility.

When a radically polymerizable compound is used in ink composition B, with regard to ink composition B, of the total weight of polymerizable compound (b-2), 55 to 100 wt % is preferably a polyfunctional radically polymerizable compound, more preferably 60 to 100 wt %, yet more preferably 80 to 100 wt %, and particularly preferably 100 wt %, that is, all of polymerizable compound (b-2) being a polyfunctional radically polymerizable compound. When in the above-mentioned range, an image obtained has excellent scratch resistance and solvent resistance.

Furthermore, the radically polymerizable compound may be monofunctional or polyfunctional.

As the monofunctional radically polymerizable compound, an *N*-vinyl compound, which is described later, is preferable, and an *N*-vinyllactam is more preferable.

Furthermore, when a radically polymerizable compound is used as the polymerizable compound (b-1) in ink composition A, ink composition A preferably comprises an *N*-vinyl compound, which is described later, and particularly preferably comprises an *N*-vinyllactam.

As the polyfunctional radically polymerizable compound, a polyfunctional (meth)acrylate compound, which is described later, is preferable. In the present invention, '(meth)acrylate' means acrylate and/or methacrylate.

As the polyfunctional radically polymerizable compound, use of a difunctional radically polymerizable compound and a tri- or higher-functional radically polymerizable compound in combination is preferable, and use of a difunctional radically polymerizable compound and a trifunctional radically polymerizable compound in combination is more preferable.

When a radically polymerizable compound is used as the polymerizable compound (b-2) in ink composition B, ink composition B preferably comprises, of the total weight of polymerizable compound (b-2), 30 to 100 wt % of a difunctional radically polymerizable compound, more preferably 50 to 95 wt %, and yet more preferably 70 to 90 wt %. Ink composition B preferably comprises, of the total weight of polymerizable compound (b-2), 5 to 50 wt % of a tri- or higher-functional radically polymerizable compound, and more preferably 10 to 30 wt %. Ink composition B preferably comprises, of the total weight of polymerizable compound (b-2), 5 to 50 wt % of a trifunctional radically polymerizable compound, and more preferably 10 to 30 wt %.

When a radically polymerizable compound is used in ink composition A, ink composition A preferably comprises, of the total weight of ink composition A, 50 to 95 wt % of a monofunctional radically polymerizable compound, more preferably 55 to 90 wt %, and yet more preferably 60 to 85 wt %. When in the above-mentioned range, an image obtained has excellent flexibility.

When a radically polymerizable compound is used in ink composition B, ink composition B preferably comprises, of the total weight of ink composition B, 50 to 98 wt % of a polyfunctional radically polymerizable compound, more preferably 55 to 95 wt %, and yet more preferably 60 to 90 wt %. When in the above-mentioned range, an image obtained has excellent scratch resistance and solvent resistance.

The monofunctional radically polymerizable compound and the polyfunctional radically polymerizable compound are explained below.

### Monofunctional radically polymerizable monomer

As the radically polymerizable compound, a monofunctional radically polymerizable monomer may be used.

Preferred examples of the monofunctional radically polymerizable monomer include a monofunctional acrylate compound, a monofunctional methacrylate, a monofunctional *N*-vinyl compound, a monofunctional acrylamide compound, and a monofunctional methacrylamide compound, and more preferred examples thereof include a monofunctional acrylate compound, a monofunctional methacrylate compound, and a monofunctional *N*-vinyl compound.

When ink composition A comprises a monofunctional radically polymerizable monomer, the monofunctional radically polymerizable monomer preferably comprises a monofunctional acrylate compound and a monofunctional *N*-vinyl compound or a monofunctional methacrylate compound and a monofunctional *N*-vinyl compound in combination, and particularly preferably comprises a monofunctional acrylate compound and a monofunctional *N*-vinyl compound in combination.

As a monofunctional radically polymerizable monomer, it is preferable to use a monomer having a cyclic structure and only one ethylenically unsaturated double bond group selected from the group consisting of an acryloyloxy group, a methacryloyloxy group, an acrylamide group, a methacrylamide group, and an *N*-vinyl group.

As the radically polymerizable monomer suitably used in the present invention, ethylenically unsaturated compounds represented by Formula (1) below can be cited.

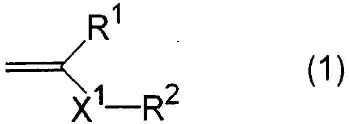

In Formula (1) above, R¹ denotes a hydrogen atom or a methyl group.

X¹ denotes a first divalent linking group in which (-C(O)O-) or (-C(O)NH-) is bonded to the ethylenically unsaturated double bond shown in Formula (1), the first divalent linking group may be bonded to a second divalent linking group that is a single bond, an ether bond (-O-), an ester bond (-C(O)O- or OC(O)-), an amide bond (-C(O)NR'- or -NR'C(O)-), a carbonyl bond (-C(O)-), an optionally branched alkylene group having no greater than 20 carbons, or a combination thereof, and it is preferable for X¹ to be the first divalent linking group alone or one having an ether bond, an ester bond, and/or an alkylene group having no greater than 20 carbons when it has the second divalent linking group. R' denotes a hydrogen atom or a monovalent organic group, preferably a hydrogen atom, a alkyl group or an acyl group, more preferably a hydrogen atom, a alkyl group having 1 to 20 carbons or an acyl group having 1 to 20 carbons. A alkyl group in the alkyl group and the acyl group of R' may have a linear structure, a branch structure or a cyclic structure.

R² is a group having at least one cyclic structure, and denotes an aromatic group such as a monocyclic aromatic group or a polycyclic aromatic group, or an alicyclic hydrocarbon group halving a cycloalkane skeleton, an adamantane skeleton, or a norbornane skeleton. The aromatic group and the alicyclic hydrocarbon group may comprise a heteroatom such as O, N, or S in the cyclic structure.

In Formula (1), the aromatic group denoted by R² is preferably a phenyl group, which is a monocyclic aromatic group, or a polycyclic aromatic group having 2 to 4 rings, but is not limited thereto, and specific examples thereof include a naphthyl group, an anthryl group, a 1H-indenyl group, a 9H-fluorenyl group, a 1H-phenalenyl group, a phenanthrenyl group, a triphenylenyl group, a pyrenyl group, a naphthacenyl group, a tetraphenylenyl group, a biphenylenyl group, an as-indacenyl group, an s-indacenyl group, an acenaphthylenyl group, a fluoranthenyl group, an acephenanthrenyl group, an aceanthrenyl group, a chrysenyl group, and a pleiadenyl group.

These aromatic groups may be aromatic heterocyclic groups containing a heteroatom such as O, N, or S. Specific examples thereof include monocyclic aromatic heterocyclic groups such as a furyl group, a thiophenyl group, a 1H-pyrrolyl group, a 2H-pyrrolyl group, a 1H-pyrazolyl group, a 1H-imidazolyl group, an isooxazolyl group, an isothiazolyl group, a 2H-pyranyl group, a 2H-thiopyranyl group, a pyridyl group, a pyridazinyl group, a pyrimidinyl group, a pyrazinyl group, a 1,2,3-triazolyl group, and a 1,2,4-triazolyl group.

Furthermore, examples thereof include polycyclic aromatic heterocyclic groups such as a thianthrenyl group, benzofuranyl group, an isobenzofuranyl group, an isochromenyl group, a 4H-chromenyl group, an xanthenyl group, a phenoxathiinyl group, an indolizinyl group, an isoindolyl group, an indolyl group, an indazolyl group, a purinyl group, a 4H-quinolizinyl group, an isoquinolyl group, a quinolino group, a phthalazinyl group, a naphthyridinyl group, a quinoxalinyl group, a quinazolinyl group, a cinnolinyl group, a pteridinyl group, a carbazolyl group, a β-carbolinyl group, a phenanthridinyl group, an acridinyl group, a perimidinyl group, a phenanthrolinyl group, a phenazinyl group, a phenothiazinyl group, a phenoxazinyl group, and a pyrrolizinyl group.

These aromatic groups may have one or more halogen atoms, hydroxyl groups, amino groups, thiol groups, siloxane groups, or substituents having no greater than 30 carbons. The aromatic group may form a cyclic structure containing a heteroatom such as O, N, or S from two or more substituents thereof as in, for example, phthalic anhydride or phthalimide anhydride.

Furthermore, R² of Formula (1) may be an alicyclic hydrocarbon group. Moreover, it may be an alicyclic hydrocarbon group containing a heteroatom such as O, N, or S.

The alicyclic hydrocarbon group may be a group having a cycloalkane with 3 to 12 carbons.

Specific examples of the alicyclic hydrocarbon group containing a heteroatom such as O, N, or S include a pyrrolidinyl group, a pyrazolidinyl group, an imidazolidinyl group, an isooxazolidinyl group, an isothiazolidinyl group, a piperidinyl group, a piperazinyl group, a morpholinyl group, and a thiomorpholinyl group.

These alicyclic hydrocarbon and heteromonocycle-containing alicyclic hydrocarbon groups may have one or more substituents, and examples of the substituent include a halogen atom, a hydroxyl group, an amino group, a thiol group, a siloxane group, and an optionally substituted hydrocarbon group having a total of no greater than 30 carbons. It may have an oxy group (= O) as a divalent substituent, and two or more substituents of the alicyclic hydrocarbon group may form a heterocyclic structure containing a heteroatom such as O, N, or S.

Furthermore, R² of Formula (1) may be a group having an adamantane skeleton represented by Formula (I) below or an alicyclic hydrocarbon group having a norbornane skeleton represented by Formula (II) below.

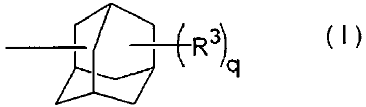

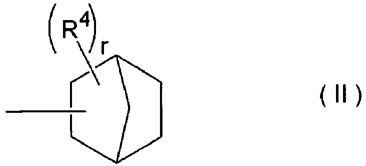

R³ and R⁴ in Formula (I) or Formula (II) independently denote a substituent that may be bonded to any position on each of the alicyclic hydrocarbon structures. Furthermore, the q R³s and the r R⁴s may each be identical to or different from each other.

The q R³s and the r R⁴s may independently be a monovalent or polyvalent substituent; the monovalent substituent is preferably a hydroxyl group, a substituted or unsubstituted amino group, a thiol group, a siloxane group, or an optionally substituted hydrocarbon group or heterocyclic group having a total of no greater than 30 carbons, and a divalent substituent is preferably an oxy group (=O).

The substitution number q for R³ denotes an integer of 0 to 5, and the substitution number r for R⁴ denotes an integer of 0 to 5.

Furthermore, one carbon atom of the adamantane framework in Formula (I) may be replaced by a carbonyl bond (-C(O)-) and/or an ester bond (-C(O)O-), and one carbon atom of the norbornane framework in Formula (II) may be replaced by an ether bond (-O-) and/or an ester bond (-C(O)O-).

The norbornane skeleton represented by Formula (II) may have a cyclic hydrocarbon structure represented by Formula (III). n in Formula (III) denotes a cyclic hydrocarbon structure whose opposite termini may substitute any positions of the norbornane skeleton, it may be a monocyclic structure or a polycyclic structure, and it may contain a carbonyl bond (-C(O)-) and/or an ester bond (-C(O)O-) in the cyclic hydrocarbon structure as well as the hydrocarbon bonds.

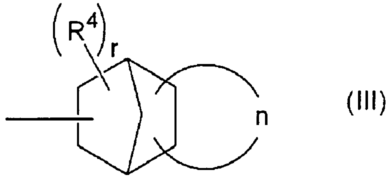

The cyclic structure represented by Formula (III) above is preferably a structure represented by Formula (IV), Formula (V), or Formula (VI).

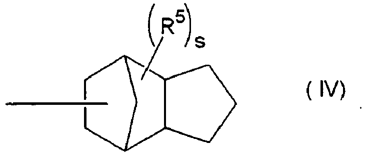

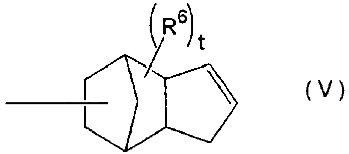

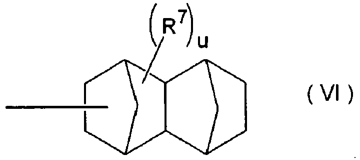

In Formula (IV), Formula (V), and Formula (VI), R⁵, R⁶, and R⁷ independently denote a substituent, s, t, and u independently denote an integer of 0 to 5, and the s R⁵s, the t R⁶s, and the u R⁷s may each be identical to or different from each other.

X¹ of Formula (1) may be bonded to any position on each of the alicyclic hydrocarbon structures shown below in Formula (IV), Formula (V), or Formula (VI).

R⁵, R⁶, and R⁷ of Formula (IV), Formula (V), or Formula (VI) independently denote a substituent, and may be bonded to any position on each of the alicyclic hydrocarbon structures shown below in Formula (IV), Formula (V), or Formula (VI). The substituents R⁵, R⁶, and R⁷ have the same meanings as the substituents R³ and R⁴ of Formula (I) to Formula (III), and preferred ranges are also the same.

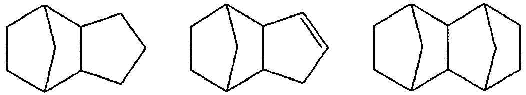

In the present invention, preferred examples of the monofunctional acrylate, the monofunctional methacrylate, the monofunctional vinyloxy compound, the monofunctional acrylamide, and the monofunctional methacrylamide include monofunctional radically polymerizable monomers having a group with a cyclic structure such as a phenyl group, a naphthyl group, an anthracenyl group, a pyridinyl group, a tetrahydrofurfuryl group, a piperidinyl group, a cyclohexyl group, a cyclopentyl group, a cycloheptyl group, an isobornyl group, a tricyclodecanyl group, or a purinyl group.

Preferred examples of the monofunctional radically polymerizable monomer that can be used in the present invention include norbornyl (meth)acrylate, isobornyl (meth)acrylate, cyclohexyl (meth)acrylate, cyclopentyl (meth)acrylate, cycloheptyl (meth)acrylate, cyclooctyl (meth)acrylate, cyclodecyl (meth)acrylate, dicyclodecyl (meth)acrylate, trimethylcyclohexyl (meth)acrylate, 4-t-butylcyclohexyl (meth)acrylate, acryloylmorpholine, 2-benzyl (meth)acrylate, phenoxyethyl (meth)acrylate, phenoxydiethylene glycol (meth)acrylate, phenoxytriethylene glycol (meth)acrylate, ethylene oxide-modified cresol (meth)acrylate (hereinafter, 'ethylene oxide' is also called 'EO'), tetrahydrofurfuryl (meth)acrylate, caprolactone-modified tetrahydrofurfuryl acrylate, nonylphenoxy polyethylene glycol (meth)acrylate, neopentyl glycol benzoate (meth)acrylate, paracumylphenoxyethylene glycol (meth)acrylate, *N-*phthalimidoethyl (meth)acrylate, pentamethylpiperidyl (meth)acrylate, tetramethylpiperidyl (meth)acrylate, *N*-cyclohexyl (meth)acrylamide, *N*-(1,1-dimethyl-2-phenyl)ethyl (meth)acrylamide, *N*-diphenylmethyl (meth)acrylamide, *N*-phthalimidomethyl (meth)acrylamide, *N*-(1,1'-dimethyl-3-(1,2,4-triazol-1-yl))propyl (meth)acrylamide, 5-(meth)acryloyloxymethyl-5-ethyl-1,3-dioxacyclohexane, (poly)ethylene glycol mono(meth)acrylate phenyl ester, (poly)propylene glycol mono(meth)acrylate phenyl ester, tetrahydrofurfuryl acrylate, benzyl acrylate, and epoxy acrylate. Among them, more preferred examples of the monofunctional radically polymerizable monomer include particularly preferably isobornyl (meth)acrylate and/or phenoxyethyl (meth)acrylate.

Furthermore, preferred specific examples of the monofunctional radically polymerizable monomer that can be used in the present invention are shown in M-1 to M-56 below.

In some of the compound examples below, a hydrocarbon chain is represented by a simplified structural formula in which symbols for carbon (C) and hydrogen (H) are omitted. Me denotes a methyl group.

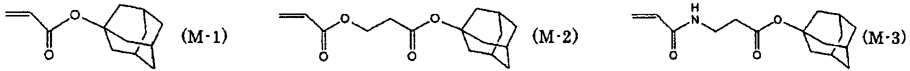

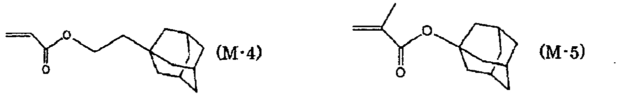

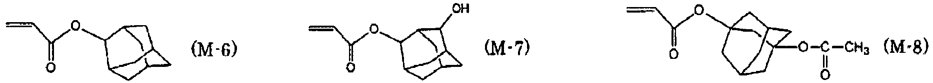

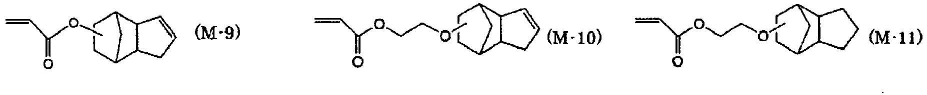

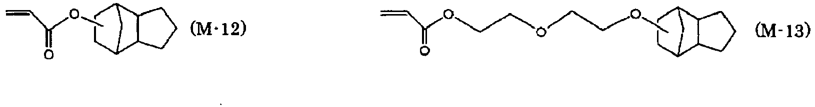

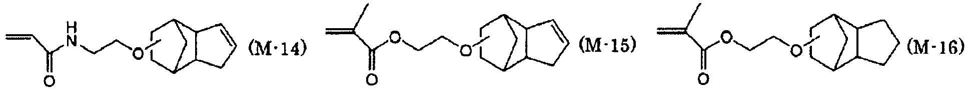

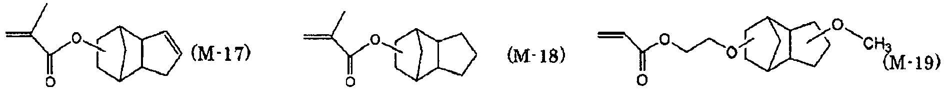

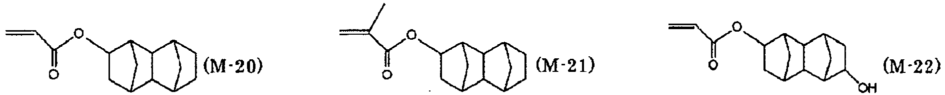

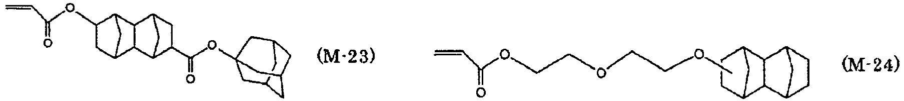

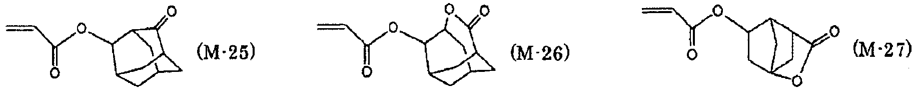

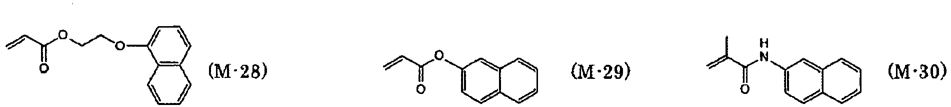

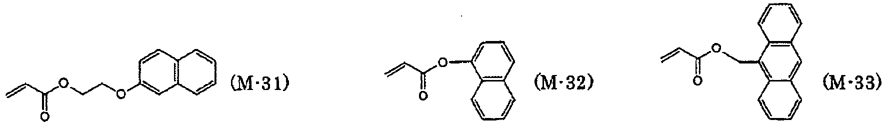

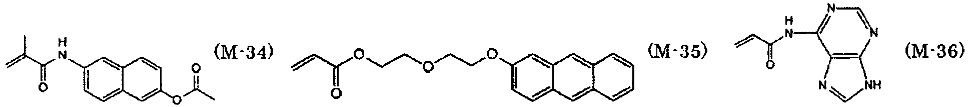

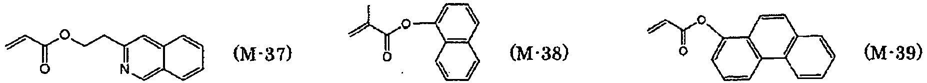

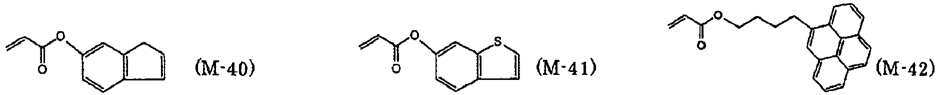

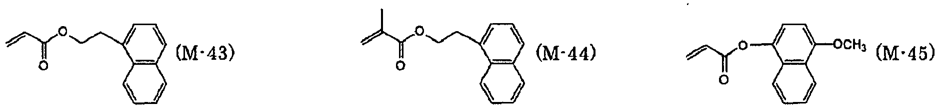

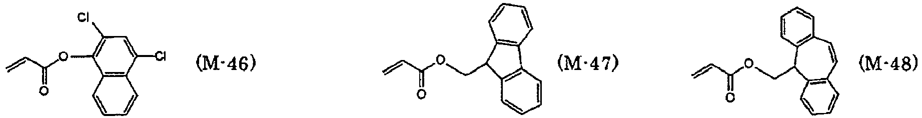

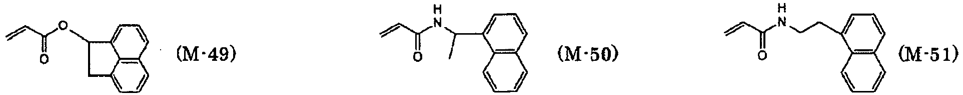

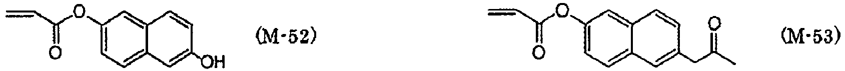

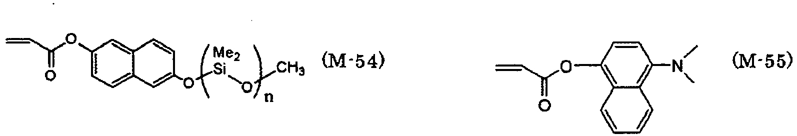

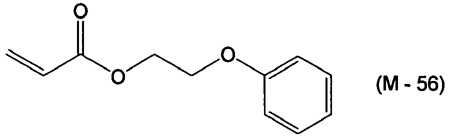

In the present invention, as the monofunctional radically polymerizable monomer, it is preferable to use a monofunctional radically polymerizable monomer having an *N*-vinyl group and a cyclic structure-containing group. In particular, it is more preferable to use *N*-vinylcarbazole, 1-vinylimidazole, or an *N*-vinyllactam, and it is yet more preferable to use an *N*-vinyllactam.

Preferred examples of the *N*-vinyllactam that can be used in the present invention include compounds represented by Formula (2) below.

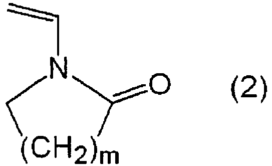

In Formula (2), m denotes an integer of 1 to 5; m is preferably an integer of 2 to 4 from the viewpoints of flexibility after the ink composition is cured, adhesion to a support, and starting material availability, m is more preferably 2 or 4, and m is particularly preferably 4, which is *N*-vinylcaprolactam. *N-*Vinylcaprolactam is preferable since it has excellent safety, is commonly used and easily available at a relatively low price, and gives particularly good ink curability and adhesion of a cured film to a support or a recording medium.

The *N*-vinyllactam may have a substituent such as an alkyl group or an aryl group on the lactam ring, and may have a saturated or unsaturated ring structure bonded thereto. The *N*-vinyllactam above may be contained in the ink composition singly or in a combination of a plurality of types.

Ink composition A preferably comprises, of the total of ink composition A, 5 to 40 wt % of an *N*-vinyl group-containing monofunctional cyclic polymerizable monomer, more preferably 10 to 35 wt %, and yet more preferably 12 to 30 wt %. It is preferable for it to be in the above range since it shows good copolymerizability with another polymerizable compound, and an ink composition having excellent curability and blocking resistance is obtained.

Furthermore, ink composition A preferably comprises the monofunctional *N*-vinyllactam represented by Formula (2) at 1 to 40 wt % of the total of ink composition A, more preferably 10 to 35 wt %, and yet more preferably 12 to 30 wt %.

When the amount of monofunctional *N*-vinyllactam used is in the above-mentioned range, the curability, the flexibility of a cured coating, and the adhesion to a support of a cured coating are excellent. The *N*-vinyllactam is a compound having a relatively high melting point. It is preferable for the content of the *N*-vinyllactam to be no greater than 40 wt % since good solubility is exhibited even at a low temperature of 0°C or less, and the temperature range in which the ink composition can be handled becomes large.

As the monofunctional radically polymerizable monomer, an acyclic monofunctional monomer described below may be used. The acyclic monofunctional monomer has relatively low viscosity and may be used preferably for the purpose of, for example, decreasing the viscosity of the ink composition. However, from the viewpoint of suppressing tackiness of a cured coating and giving a high film strength so that scratches, etc. do not occur during molding, the proportion of the acyclic monofunctional monomer below in the total ink composition is preferably no greater than 20 wt %, and more preferably no greater than 15 wt %.

Specific examples include octyl (meth)acrylate, 2-ethylhexyl (meth)acrylate, decyl (meth)acrylate, dodecyl (meth)acrylate, tridecyl (meth)acrylate, tetradecyl (meth)acrylate, hexadecyl (meth)acrylate, 2-hydroxyethyl (meth)acrylate, butoxyethyl (meth)acrylate, carbitol (meth)acrylate, 2-ethylhexyl diglycol (meth)acrylate, polyethylene glycol (meth)acrylate monomethyl ether, polypropylene glycol (meth)acrylate monomethyl ether, and polytetraethylene glycol (meth)acrylate monomethyl ether.

Other than the above, examples also include (poly)ethylene glycol mono(meth)acrylate, (poly)ethylene glycol (meth)acrylate methyl ester, (poly)ethylene glycol (meth)acrylate ethyl ester, (poly)propylene glycol mono(meth)acrylate, (poly)propylene glycol (meth)acrylate methyl ester, (poly)propylene glycol (meth)acrylate ethyl ester, 2-ethylhexyl acrylate, *n*-octyl acrylate, *n*-nonyl acrylate, *n*-decyl acrylate, isooctyl acrylate, *n*-lauryl acrylate, *n*-tridecyl acrylate, *n*-cetyl acrylate, *n*-stearyl acrylate, 2-hydroxyethyl acrylate, butoxyethyl acrylate, oligoester acrylate, *N*-methylolacrylamide, diacetone acrylamide, methyl methacrylate, *n*-butyl methacrylate, 2-ethylhexyl methacrylate, *n*-octyl methacrylate, *n-*nonyl methacrylate, *n*-decyl methacrylate, isooctyl methacrylate, *n*-lauryl methacrylate, *n*-tridecyl methacrylate, *n*-cetyl methacrylate, *n*-stearyl methacrylate, allyl methacrylate, glycidyl methacrylate, benzyl methacrylate, dimethylaminomethyl methacrylate, and allyl glycidyl ether.

Furthermore, examples of the monofunctional radically polymerizable monomer include 2-hydroxy-3-phenoxylpropyl acrylate, 2-hydroxybutyl acrylate, 2-acryloyloxyethylphthalic acid, 2-acryloyloxyethyl-2-hydroxyethylphthalic acid, ethoxylated phenyl acrylate, 2-acryloyloxyethylsuccinic acid, 2-acryloyloxyethylhexahydrophthalic acid, lactone-modified flexible acrylate, butoxyethyl acrylate, 2-hydroxyethyl acrylate, and methoxydipropylene glycol acrylate.

### Polyfunctional radically polymerizable monomer

As the radically polymerizable compound, a polyfunctional radically polymerizable monomer may be used.

As the polyfunctional radically polymerizable monomer, a polyfunctional polymerizable monomer having two or more ethylenically unsaturated double bonds selected from the group consisting of an acryloyloxy group, a methacryloyloxy group, an acrylamide group, a methacrylamide group, a vinyloxy group, and an *N*-vinyl group can be cited as preferred examples. By containing a polyfunctional polymerizable monomer, an ink composition having a high cured coating strength is obtained.

Preferred examples of polyfunctional polymerizable monomers having a radically polymerizable ethylenically unsaturated bond include unsaturated carboxylic acids such as acrylic acid, methacrylic acid, itaconic acid, crotonic acid, isocrotonic acid, and maleic acid, and salts thereof, anhydrides having an ethylenically unsaturated group, acrylonitrile, styrene, and various types of unsaturated polyesters, unsaturated polyethers, unsaturated polyamides, and (meth)acrylic acid esters of unsaturated urethane (meth)acrylic monomers or prepolymers, epoxy monomers or prepolymers, or urethane monomers or prepolymers, which are compounds having two or more ethylenically unsaturated double bonds.

Specific examples thereof include neopentyl glycol di(meth)acrylate, (poly)ethylene glycol di(meth)acrylate, diethylene glycol di(meth)acrylate, triethylene glycol di(meth)acrylate, tetraethylene glycol di(meth)acrylate, polypropylene glycol di(meth)acrylate, (poly)tetramethylene glycol di(meth)acrylate, bisphenol A propylene oxide (PO) adduct di(meth)acrylate, ethoxylated neopentyl glycol di(meth)acrylate, propoxylated neopentyl glycol di(meth)acrylate, bisphenol A ethylene oxide (EO) adduct di(meth)acrylate, EO-modified pentaerythritol tri(meth)acrylate, PO-modified pentaerythritol tri(meth)acrylate, EO-modified pentaerythritol tetra(meth)acrylate, PO-modified pentaerythritol tetra(meth)acrylate, EO-modified dipentaerythritol tetra(meth)acrylate, PO-modified dipentaerythritol tetra(meth)acrylate, EO-modified trimethylolpropane tri(meth)acrylate, PO-modified trimethylolpropane tri(meth)acrylate, EO-modified tetramethylolmethane tetra(meth)acrylate, PO-modified tetramethylolmethane tetra(meth)acrylate, pentaerythritol tri(meth)acrylate, pentaerythritol tetra(meth)acrylate, dipentaerythritol tetra(meth)acrylate, trimethylolpropane tri(meth)acrylate, tetramethylolmethane tetra(meth)acrylate, trimethylolethane tri(meth)acrylate, trimethylolpropane tri(meth)acrylate, bis(4-(meth)acryloxypolyethoxyphenyl)propane, diallyl phthalate, triallyl trimellitate, 1,6-hexanediol di(meth)acrylate, 1,9-nonanediol di(meth)acrylate, 1,10-decanediol di(meth)acrylate, neopentyl glycol hydroxypivalate di(meth)acrylate, tetramethylolmethane tri(meth)acrylate, dimethyloltricyclodecane di(meth)acrylate, modified glycerol tri(meth)acrylate, bisphenol A diglycidyl ether (meth)acrylic acid adduct, modified bisphenol A di(meth)acrylate, caprolactone-modified dipentaerythritol hexa(meth)acrylate, dipentaerythritol hexa(meth)acrylate, pentaerythritol tri(meth)acrylate tolylene diisocyanate urethane prepolymer, pentaerythritol tri(meth)acrylate hexamethylene diisocyanate urethane prepolymer, ditrimethylolpropane tetra(meth)acrylate, and pentaerythritol tri(meth)acrylate hexamethylene diisocyanate urethane prepolymer. More specifically, commercial products, radically polymerizable or crosslinking monomers, oligomers, and polymers known in the art such as those described in 'Kakyozai Handobukku' (Crosslinking Agent Handbook), Ed. S. Yamashita (Taiseisha, 1981); 'UV·EB Koka Handobukku (Genryo)' (UV·EB Curing Handbook (Starting Materials)) Ed. K. Kato (Kobunshi Kankoukai, 1985); 'UV·EB Koka Gijutsu no Oyo to Shijyo' (Application and Market of UV·EB Curing Technology', p. 79, Ed. Rad Tech (CMC, 1989); and E. Takiyama 'Poriesuteru Jushi Handobukku' (Polyester Resin Handbook), (The Nikkan Kogyo Shimbun Ltd., 1988) may be used.

Among them, as the polyfunctional polymerizable monomer, those below can be cited as preferred examples.

Preferred examples of the difunctional radically polymerizable monomer include ethylene glycol di(meth)acrylate, diethylene glycol di(meth)acrylate, triethylene glycol di(meth)acrylate, tetraethylene glycol di(meth)acrylate, polyethylene glycol di(meth)acrylate, propylene glycol di(meth)acrylate, dipropylene glycol di(meth)acrylate, tripropylene glycol di(meth)acrylate, tetrapropylene glycol di(meth)acrylate, polypropylene glycol di(meth)acrylate, ethoxylated neopentyl glycol diacrylate, and propoxylated neopentyl glycol diacrylate.

As the tri- or higher-functional radically polymerizable monomer, a compound represented by Formula (3) below can be cited as a preferred example.

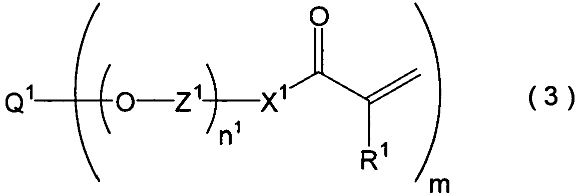

In Formula (3), R¹ denotes a hydrogen atom or a methyl group, X¹ denotes an oxygen atom or NR', R' denotes a hydrogen atom or an alkyl group, Z¹ denotes an alkylene group, Q¹ denotes an m-valent organic group, n¹ denotes an integer of at least 0, m denotes an integer of at least 3, the m R¹s, X¹s, and n¹s are independently selected from the above, and when there are a plurality of Z¹s, they may be independently selected from the above, provided that the sum total of the m n¹s of a compound represented by Formula (3) is an integer of at least 1.

R¹ in Formula (3) above denotes a hydrogen atom or a methyl group, and is preferably a hydrogen atom from the viewpoint of reactivity and flexibility of a polymer formed by a polymerization reaction. The m R¹s are independently selected from the above.

X¹ in Formula (3) denotes an oxygen atom or NR', and is preferably an oxygen atom since mobility around a polymerizable site is improved. R' denotes a hydrogen atom or an alkyl group, preferably a hydrogen atom or an alkyl group having 1 to 4 carbons, and more preferably a hydrogen atom. The m X¹s are independently selected from the above.

Z¹ in Formula (3) above denotes an alkylene group, and is preferably an alkylene group having 1 to 6 carbons, more preferably an alkylene group having 2 to 6 carbons, yet more preferably an alkylene group having 2 to 4 carbons such as an ethylene group, a propylene group (straight-chain or branched), or a butylene group (straight-chain or branched), particularly preferably an ethylene group or a propylene group (straight-chain or branched), and most preferably an ethylene group. It is preferable for it to be in the above-mentioned range since a discharged ink composition (in particular, a thin coating portion) has excellent curability. When there are a plurality of Z¹s, they are independently selected from the above.

The m n¹s in Formula (3) above may be independently selected from the group consisting of integers of at least 0, provided that the sum total of the m n¹s of a compound represented by Formula (3) is an integer of at least 1. n¹ is preferably 1 to 80, and more preferably 1 to 25. The sum total of the m n¹s is at least 1, preferably 3 to 100, more preferably 3 to 75, and particularly preferably 6 to 50. It is preferable for n¹ or the sum total of the n¹s to be in the above-mentioned range since the curability of an ink composition and the flexibility are both excellent.

Furthermore, m in Formula (3) above is an integer of at least 3, preferably 3 to 12, more preferably 3 to 8, and yet more preferably 3 to 6. It is preferable for it to be in the above-mentioned range since the curability of an ink composition is excellent.

Q¹ in Formula (3) above denotes an m-valent organic group, and the organic group is preferably an organic group having 3 to 40 carbons, more preferably an organic group having 3 to 30 carbons, and yet more preferably an organic group having 3 to 20 carbons. Among them, an m-valent hydrocarbon group having 3 to 20 carbons, which may optionally be branched or have a ring structure, and an m-valent organic group having 3 to 20 carbons, in which at least two mono- or higher-valent hydrocarbon groups, which may optionally be branched or have a ring structure, and at least one hetero bond are combined, are preferable.

Examples of the m-valent hydrocarbon group (m is any integer of at least 1) include a group formed by removing m hydrogen atoms from an alkane, an alkene, an alkyne, an aromatic ring, a hydrocarbon ring, or a hydrocarbon in which two or more of the above are bonded.

Examples of the hetero bond include -O-, -CO-, -COO-, -OCO-, -CONR'-, -NR'CO-, -SO₂-, and -SO-.

Furthermore, the oxygen atom bonded to Q¹ in Formula (3) above is preferably ethereally bonded.

In particular, from the viewpoint of inkjet suitability of an ink composition, Q¹ preferably has 3 to 18 carbons, and more preferably 3 to 10 carbons, the hydrocarbon group is preferably a group formed by removing m hydrogen atoms from an alkane, and when Q¹ has a hetero bond, the hetero bond is preferably an ether bond and the number of ether bonds is preferably one.

Furthermore, the compound represented by Formula (3) is preferably a compound represented by Formula (4) to Formula (7).

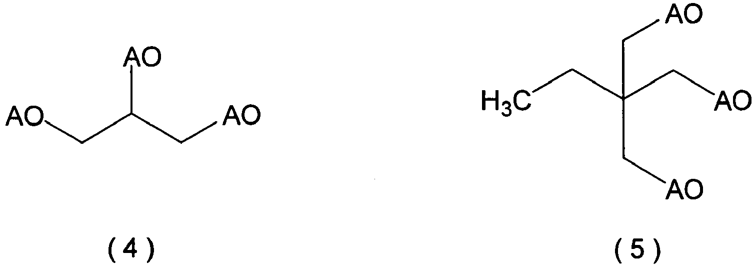

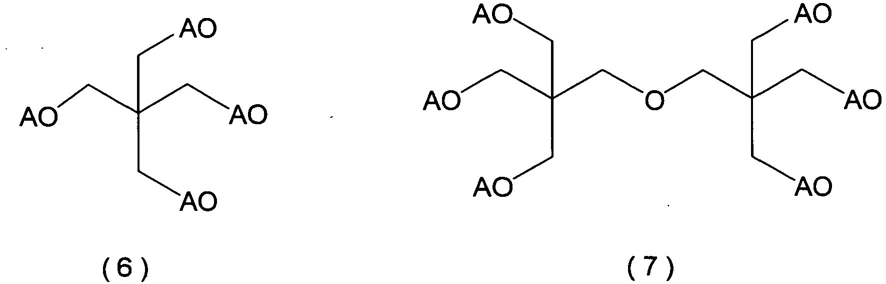

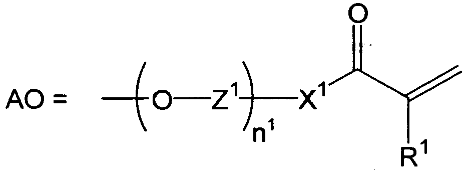

In Formula (4) to Formula (7), R¹, X¹, Z¹, and n¹ have the same meanings as those of R¹, X¹, Z¹, and n¹ in Formula (3) above, and preferred ranges are also the same. Furthermore, the total number of AOs in a compound represented by Formula (4) to Formula (7) corresponds to m in Formula (3) above.

Examples of commercial products of the compound represented by Formula (3) include NK Ester AT-30E, ATM-4E, ATM-4P, and ATM-35E manufactured by Shin-Nakamura Chemical Co., Ltd., New Frontier GE3A, TMP-3, TMP-15, TMP-3P, and TMP-2P manufactured by Dai-ichi Kogyo Seiyaku Co., Ltd., Beamset 720 manufactured by Arakawa Chemical Industries Ltd., KAYARAD GPO-303 manufactured by Nippon Kayaku Co., Ltd., SR 9020, SR 454, SR 499, SR 502, SR 9035, SR 415, SR 492, and SR 494 manufactured by Sartomer Company Inc., Viscoat GPT, #360 manufactured by Osaka Organic Chemical Industry Ltd., OTA480, EB53, EB-160, and Ebecryl 40 manufactured by Daicel-Cytec Company Ltd., Light-Acrylate TMP-30EO-A and TMP-6EO-3A manufactured by Kyoeisha Chemical Co., Ltd., LUMICURE ETA-300 manufactured by Dainippon Ink and Chemicals, Incorporated, Aronix M-350, M-360, M-310, and M-320 manufactured by Toagosei Co., Ltd., Photomer 4149 and 4072 manufactured by San Nopco Limited, Laromer LR8863 manufactured by BASF, and Diabeam UK-4153 and UK-4154 manufactured by Mitsubishi Rayon Co., Ltd.

It is also preferable to use a vinyl ether compound as the radically polymerizable compound.

Examples of vinyl ether compounds that are suitably used include di- or tri-vinyl ether compounds such as ethylene glycol divinyl ether, diethylene glycol divinyl ether, triethylene glycol divinyl ether, propylene glycol divinyl ether, dipropylene glycol divinyl ether, butanediol divinyl ether, hexanediol divinyl ether, cyclohexanedimethanol divinyl ether, and trimethylolpropane trivinyl ether; and monovinyl ether compounds such as ethyl vinyl ether, *n*-butyl vinyl ether, isobutyl vinyl ether, octadecyl vinyl ether, cyclohexyl vinyl ether, hydroxybutyl vinyl ether, 2-ethylhexyl vinyl ether, cyclohexanedimethanol monovinyl ether, *n*-propyl vinyl ether, isopropyl vinyl ether, isopropenyl vinyl ether, dodecyl vinyl ether, diethylene glycol monovinyl ether, octadecyl vinyl ether, ethylene glycol monovinyl ether, hydroxyethyl monovinyl ether, triethylene glycol monovinyl ether, and hydroxynonyl monovinyl ether.

The vinyl ether compound may be used singly or in a combination of two or more types as appropriate.

The monomers listed above as the radically polymerizable compound have high reactivity, low viscosity, and excellent adhesion to a support.

### Cationically polymerizable compound

As the cationically polymerizable compound in the present invention, from the viewpoint of curability and scratch resistance, an oxetane ring-containing compound and an oxirane ring-containing compound are suitable, and a mode in which both an oxetane ring-containing compound and an oxirane ring-containing compound are contained is preferable.

The oxirane ring-containing compound (hereinafter, also called an 'oxirane compound') referred to in the present specification, etc. is a compound containing at least one oxirane ring (oxiranyl group, epoxy group) per molecule; specifically, it may be selected as appropriate from those usually used as epoxy resins, and examples thereof include conventionally known aromatic epoxy resins, alicyclic epoxy resins, and aliphatic epoxy resins. It may be any of a monomer, an oligomer, and a polymer.

Furthermore, the oxetane ring-containing compound (hereinafter, also called an 'oxetane compound') referred to is a compound containing at least one oxetane ring (oxetanyl group) per molecule.

When a cationically polymerizable compound is used in ink composition A, ink composition A comprises, of the total weight of polymerizable compound (b-1), 65 to 95 wt % of a monofunctional cationically polymerizable compound, more preferably 65 to 85 wt %, and yet more preferably 65 to 75 wt %. When in the above-mentioned range, an image obtained has excellent flexibility.

When a cationically polymerizable compound is used in ink composition B, ink composition B preferably comprises, of the total weight of polymerizable compound (b-2), 50 to 90 wt % of a polyfunctional cationically polymerizable compound, more preferably 52 to 75 wt %, and yet more preferably 55 to 65 wt %. When in the above-mentioned range, an image obtained has excellent scratch resistance and solvent resistance.

Furthermore, the cationically polymerizable compound may be monofunctional or polyfunctional.

As the monofunctional cationically polymerizable compound, a monofunctional oxirane compound and/or a monofunctional oxetane compound are preferable.

As the polyfunctional cationically polymerizable compound, a difunctional cationically polymerizable compound is preferable. As the polyfunctional cationically polymerizable compound, a polyfunctional oxirane compound and/or a polyfunctional oxetane compound are preferable, and use of a polyfunctional oxirane compound and a polyfunctional oxetane compound in combination is more preferable.

When a cationically polymerizable compound is used in ink composition A, ink composition A comprises, of the total weight of ink composition A, 40 to 95 wt % of a monofunctional cationically polymerizable compound, more preferably 45 to 80 wt %, and yet more preferably 45 to 65 wt %. When in the above-mentioned range, an image obtained has excellent flexibility.

When a cationically polymerizable compound is used in ink composition B, ink composition B preferably comprises, of the total weight of ink composition B, 35 to 90 wt % of a polyfunctional cationically polymerizable compound, more preferably 38 to 75 wt %, and yet more preferably 40 to 60 wt %. When in the above-mentioned range, an image obtained has excellent scratch resistance and solvent resistance.

The monofunctional cationically polymerizable compound and the polyfunctional cationically polymerizable compound that can be used in the present invention are explained in detail below.

Examples of the cationically polymerizable compound include epoxy compounds, vinyl ether compounds, and oxetane compounds described in JP-A-6-9714, JP-A-2001-31892, JP-A-2001-40068, JP-A-2001-55507, JP-A-2001-310938, JP-A-2001-310937, JP-A-2001-220526, etc.

Examples of monofunctional epoxy compounds that can be used in the present invention include phenyl glycidyl ether, *p-tert*-butylphenyl glycidyl ether, butyl glycidyl ether, 2-ethylhexyl glycidyl ether, allyl glycidyl ether, 1,2-butylene oxide, 1,3-butadiene monooxide, 1,2-epoxydodecane, epichlorohydrin, 1,2-epoxydecane, styrene oxide, cyclohexene oxide, 3-methacryloyloxymethylcyclohexene oxide, 3-acryloyloxymethylcyclohexene oxide, and 3-vinylcyclohexene oxide.

Furthermore, examples of polyfunctional epoxy compounds include bisphenol A diglycidyl ether, bisphenol F diglycidyl ether, bisphenol S diglycidyl ether, brominated bisphenol A diglycidyl ether, brominated bisphenol F diglycidyl ether, brominated bisphenol S diglycidyl ether, epoxy novolac resins, hydrogenated bisphenol A diglycidyl ether, hydrogenated bisphenol F diglycidyl ether, hydrogenated bisphenol S diglycidyl ether, 3,4-epoxycyclohexylmethyl 3',4'-epoxycyclohexanecarboxylate, 2-(3,4-epoxycyclohexyl)-7,8-epoxy-1,3-dioxaspiro[5.5]undecane, bis(3,4-epoxycyclohexylmethyl) adipate, vinylcyclohexene oxide, 4-vinylepoxycyclohexane, bis(3,4-epoxy-6-methylcyclohexylmethyl) adipate, 3,4-epoxy-6-methylcyclohexyl 3',4'-epoxy-6'-methylcyclohexanecarboxylate, methylenebis(3,4-epoxycyclohexane), dicyclopentadiene diepoxide, the di(3,4-epoxycyclohexylmethyl) ether of ethylene glycol, ethylenebis(3,4-epoxycyclohexanecarboxylate), dioctyl epoxyhexahydrophthalate, di-2-ethylhexyl epoxyhexahydrophthalate, 1,4-butanediol diglycidyl ether, 1,6-hexanediol diglycidyl ether, glycerol triglycidyl ether, trimethylolpropane triglycidyl ether, polyethylene glycol diglycidyl ether, polypropylene glycol diglycidyl ether, 1,13-tetradecadiene dioxide, limonene dioxide, 1,2,7,8-diepoxyoctane, and 1,2,5,6-diepoxycyclooctane.

Among these epoxy compounds, the aromatic epoxides and the alicyclic epoxides are preferable from the viewpoint of excellent curing speed, and the alicyclic epoxides are particularly preferable.

Examples of monofunctional vinyl ethers that can be used in the present invention include methyl vinyl ether, ethyl vinyl ether, propyl vinyl ether, *n*-butyl vinyl ether, *t*-butyl vinyl ether, 2-ethylhexyl vinyl ether, *n*-nonyl vinyl ether, lauryl vinyl ether, cyclohexyl vinyl ether, cyclohexylmethyl vinyl ether, 4-methylcyclohexylmethyl vinyl ether, benzyl vinyl ether, dicyclopentenyl vinyl ether, 2-dicyclopentenoxyethyl vinyl ether, methoxyethyl vinyl ether, ethoxyethyl vinyl ether, butoxyethyl vinyl ether, methoxyethoxyethyl vinyl ether, ethoxyethoxyethyl vinyl ether, methoxypolyethylene glycol vinyl ether, tetrahydrofurfuryl vinyl ether, 2-hydroxyethyl vinyl ether, 2-hydroxypropyl vinyl ether, 4-hydroxybutyl vinyl ether, 4-hydroxymethylcyclohexylmethyl vinyl ether, diethylene glycol monovinyl ether, polyethylene glycol vinyl ether, chloroethyl vinyl ether, chlorobutyl vinyl ether, chloroethoxyethyl vinyl ether, phenylethyl vinyl ether, and phenoxypolyethylene glycol vinyl ether.

Furthermore, examples of polyfunctional vinyl ethers include divinyl ethers such as ethylene glycol divinyl ether, diethylene glycol divinyl ether, polyethylene glycol divinyl ether, propylene glycol divinyl ether, butylene glycol divinyl ether, hexanediol divinyl ether, bisphenol A alkylene oxide divinyl ether, and bisphenol F alkylene oxide divinyl ether; and polyfunctional vinyl ethers such as trimethylolethane trivinyl ether, trimethylolpropane trivinyl ether, ditrimethylolpropane tetravinyl ether, glycerol trivinyl ether, pentaerythritol tetravinyl ether, dipentaerythritol pentavinyl ether, dipentaerythritol hexavinyl ether, an ethylene oxide adduct of trimethylolpropane trivinyl ether, a propylene oxide adduct of trimethylolpropane trivinyl ether, an ethylene oxide adduct of ditrimethylolpropane tetravinyl ether, a propylene oxide adduct of ditrimethylolpropane tetravinyl ether, an ethylene oxide adduct of pentaerythritol tetravinyl ether, a propylene oxide adduct of pentaerythritol tetravinyl ether, an ethylene oxide adduct of dipentaerythritol hexavinyl ether, and a propylene oxide adduct of dipentaerythritol hexavinyl ether.

As the vinyl ether compound, the di- or tri-vinyl ether compounds are preferable from the viewpoint of curability, adhesion to a support, surface hardness of the image formed, etc., and the divinyl ether compounds are particularly preferable.

As the oxetane compound in the present invention, a known oxetane compound such as one described in JP-A-2001-220526, JP-A-2001-310937, and JP-A-2003-341217 may be selected freely.

As the oxetane compound that can be used in the present invention, a compound having 1 to 4 oxetane rings in the structure is preferable. In accordance with the use of such a compound, it becomes easy to maintain the viscosity of the inkjet recording liquid in a range that gives good handling properties and, furthermore, the cured ink can be given high adhesion to a support.

Examples of monofunctional oxetane compounds that can be used in the present invention include 3-ethyl-3-hydroxymethyloxetane, 3-(meth)allyloxymethyl-3-ethyloxetane, (3-ethyl-3-oxetanylmethoxy)methylbenzene, 4-fluoro-[1-(3-ethyl-3-oxetanylmethoxy)methyl]benzene, 4-methoxy-[1-(3-ethyl-3-oxetanylmethoxy)methyl]benzene, [1-(3-ethyl-3-oxetanylmethoxy)ethyl] phenyl ether, isobutoxymethyl (3-ethyl-3-oxetanylmethyl) ether, isobornyloxyethyl (3-ethyl-3-oxetanylmethyl) ether, isobornyl (3-ethyl-3-oxetanylmethyl) ether, 2-ethylhexyl (3-ethyl-3-oxetanylmethyl) ether, ethyl diethylene glycol (3-ethyl-3-oxetanylmethyl) ether, dicyclopentadiene (3-ethyl-3-oxetanylmethyl) ether, dicyclopentenyloxyethyl (3-ethyl-3-oxetanylmethyl) ether, dicyclopentenyl (3-ethyl-3-oxetanylmethyl) ether, tetrahydrofurfuryl (3-ethyl-3-oxetanylmethyl) ether, tetrabromophenyl (3-ethyl-3-oxetanylmethyl) ether, 2-tetrabromophenoxyethyl (3-ethyl-3-oxetanylmethyl) ether, tribromophenyl (3-ethyl-3-oxetanytmethyl) ether, 2-tribromophenoxyethyl (3-ethyl-3-oxetanylmethyl) ether, 2-hydroxyethyl (3-ethyl-3-oxetanylmethyl) ether, 2-hydroxypropyl (3-ethyl-3-oxetanylmethyl) ether, butoxyethyl (3-ethyl-3-oxetanylmethyl) ether, pentachlorophenyl (3-ethyl-3-oxetanylmethyl) ether, pentabromophenyl (3-ethyl-3-oxetanylmethyl) ether, and bornyl (3-ethyl-3-oxetanylmethyl) ether.

Examples of polyfunctional oxetane compounds include polyfunctional oxetanes such as 3,7-bis(3-oxetanyl)-5-oxanonane, 3,3'-(1,3-(2-methylenyl)propanediylbis(oxymethylene))bis(3-ethyloxetane), 1,4-bis[(3-ethyl-3-oxetanylmethoxy)methyl]benzene, 1,2-bis[(3-ethyl-3-oxetanylmethoxy)methyl]ethane, 1,3-bis[(3-ethyl-3-oxetanylmethoxy)methyl]propane, ethylene glycol bis(3-ethyl-3-oxetanylmethyl) ether, dicyclopentenylbis(3-ethyl-3-oxetanylmethyl) ether, triethylene glycol bis(3-ethyl-3-oxetanylmethyl) ether, tetraethylene glycol bis(3-ethyl-3-oxetanylmethyl) ether, tricyclodecanediyldimethylene (3-ethyl-3-oxetanylmethyl) ether, trimethylolpropane tris(3-ethyl-3-oxetanylmethyl) ether, 1,4-bis(3-ethyl-3-oxetanylmethoxy)butane, 1,6-bis(3-ethyl-3-oxetanylmethoxy)hexane, pentaerythritol tris(3-ethyl-3-oxetanylmethyl) ether, pentaerythritol tetrakis(3-ethyl-3-oxetanylmethyl) ether, polyethylene glycol bis(3-ethyl-3-oxetanylmethyl) ether, dipentaerythritol hexakis(3-ethyl-3-oxetanylmethyl) ether, dipentaerythritol pentakis(3-ethyl-3-oxetanylmethyl) ether, dipentaerythritol tetrakis(3-ethyl-3-oxetanylmethyl) ether, caprolactone-modified dipentaerythritol hexakis(3-ethyl-3-oxetanylmethyl) ether, caprolactone-modified dipentaerythritol pentakis(3-ethyl-3-oxetanylmethyl) ether, ditrimethylolpropane tetrakis(3-ethyl-3-oxetanylmethyl) ether, EO-modified bisphenol A bis(3-ethyl-3-oxetanylmethyl) ether, PO-modified bisphenol A bis(3-ethyl-3-oxetanylmethyl) ether, EO-modified hydrogenated bisphenol A bis(3-ethyl-3-oxetanylmethyl) ether, PO-modified hydrogenated bisphenol A bis(3-ethyl-3-oxetanylmethyl) ether, and EO-modified bisphenol F (3-ethyl-3-oxetanylmethyl) ether.

Such oxetane compounds are described in detail in JP-A-2003-341217, paragraphs 0021 to 0084, and the compounds described therein may also be suitably used in the present invention.

In the present invention, only one type of these cationically polymerizable compounds may be used, or two or more types may be used in combination.

The total weight of polymerizable compound in the ink composition in the present invention is preferably 55 to 95 wt %, and more preferably 60 to 90 wt %, relative to the total weight of the ink composition. When it is in the above-mentioned range, the curability is excellent, and the viscosity is appropriate.

A process for producing the polymerizable compound that can be used in the present invention is not particularly limited, and it may be synthesized by a known method. Where available, a commercial product may be used.

### (c) Colorant

The ink composition that can be used in the present invention may contain a colorant in order to improve the visibility of a formed image area.

The coloring agent that can be used in the present invention is not particularly limited, but a pigment and an oil-soluble dye that have excellent weather resistance and rich color reproduction are preferable, and it may be selected from any known coloring agent such as a soluble dye. It is preferable that the coloring agent that can be suitably used in the ink composition or the inkjet recording ink composition of the present invention does not function as a polymerization inhibitor in a polymerization reaction, which is a curing reaction. This is because the sensitivity of the curing reaction by actinic radiation should not be degraded.

The pigment that can be used in the present invention is not particularly limited and, for example, organic and inorganic pigments having the numbers below described in the Color Index may be used.

That is, as a red or magenta pigment, Pigment Red 3, 5, 19, 22, 31, 38, 43, 48:1, 48:2, 48:3, 48:4, 48:5, 49:1, 53:1, 57:1, 57:2, 58:4, 63:1, 81, 81:1, 81:2, 81:3, 81:4, 88, 104, 108, 112, 122, 123, 144, 146, 149, 166, 168, 169, 170, 177, 178, 179, 184, 185, 208, 216, 226, or 257, Pigment Violet 3, 19, 23, 29, 30, 37, 50, or 88, and Pigment Orange 13, 16, 20, or 36;
as a blue or cyan pigment, Pigment Blue 1, 15, 15:1, 15:2, 15:3, 15:4, 15:6, 16, 17-1, 22, 27, 28, 29, 36, or 60;
as a green pigment, Pigment Green 7, 26, 36, or 50;
as a yellow pigment, Pigment Yellow 1, 3, 12, 13, 14, 17, 34, 35, 37, 55, 74, 81, 83, 93, 94, 95, 97, 108, 109, 110, 120, 137, 138, 139, 153, 154, 155, 157, 166, 167, 168, 180, 185, or 193; as a black pigment,
Pigment Black 7, 28, or 26; as a white pigment,
Pigment White 6, 18, or 21, etc. may be used according to the intended application.

The oil-soluble dye that can be used in the present invention is explained below.

The oil-soluble dye that can be used in the present invention means a dye that is substantially insoluble in water. Specifically, the solubility in water at 25°C (the mass of dye that can be dissolved in 100 g of water) is no greater than 1 g, preferably no greater than 0.5 g, and more preferably no greater than 0.1 g. Therefore, the oil-soluble dye means a so-called water-insoluble pigment or an oil-soluble dye, and among these the oil-soluble dye is preferable.

Among the oil-soluble dyes that can be used in the present invention, as a yellow dye, any may be used. Examples thereof include aryl or heteryl azo dyes having a coupling component such as a phenol, a naphthol, an aniline, a pyrazolone, a pyridone, or an open-chain active methylene compound; azomethine dyes having a coupling component such as an open-chain active methylene compound; methine dyes such as benzylidene dyes and monomethineoxonol dyes; quinone dyes such as naphthoquinone dyes and anthraquinone dyes; and other dye species such as quinophthalone dyes, nitro/nitroso dyes, acridine dyes, and acridinone dyes.

Among the above-mentioned oil-soluble dyes that can be used in the present invention, as a magenta dye, any may be used. Examples thereof include aryl or heteryl azo dyes having a coupling component such as a phenol, a naphthol, or an aniline; azomethine dyes having a coupling component such as a pyrazolone or a pyrazolotriazole; methine dyes such as arylidene dyes, styryl dyes, merocyanine dyes, and oxonol dyes; carbonium dyes such as diphenylmethane dyes, triphenylmethane dyes, and xanthene dyes; quinone dyes such as naphthoquinones, anthraquinones, or anthrapyridones; and condensed polycyclic dyes such as dioxazine dyes.

Among the oil-soluble dyes that can be used in the present invention, as a cyan dye, any may be used. Examples thereof include indoaniline dyes, indophenol dyes, and azomethine dyes having a coupling component such as a pyrrolotriazole; polymethine dyes such as cyanine dyes, oxonol dyes, and merocyanine dyes; carbonium dyes such as diphenylmethane dyes, triphenylmethane dyes, and xanthene dyes; phthalocyanine dyes; anthraquinone dyes; aryl or heteryl azo dyes having a coupling component such as a phenol, a naphthol, or an aniline; and indigo/thioindigo dyes.

The above-mentioned dyes may be dyes that exhibit respective colors of yellow, magenta, and cyan only after a part of the chromophore dissociates, and in that case the counter cation may be an inorganic cation such as an alkali metal or ammonium, may be an organic cation such as pyridinium or a quaternary ammonium salt, or may be a polymer cation having the above cation as a partial structure.

Although not limited to the following, preferred specific examples thereof include Cl Solvent Black 3, 7, 27, 29, and 34; Cl Solvent Yellow 14, 16, 19, 29, 30, 56, 82, 93, and 162; Cl Solvent Red 1, 3, 8, 18, 24, 27, 43, 49, 51, 72, 73, 109, 122, 132, and 218; Cl Solvent Violet 3; Cl Solvent Blue 2, 11, 25, 35, 38, 67, and 70; Cl Solvent Green 3 and 7; and Cl Solvent Orange 2.

Particularly preferred examples thereof include Nubian Black PC-0850, Oil Black HBB, Oil Yellow 129, Oil Yellow 105, Oil Pink 312, Oil Red 5B, Oil Scarlet 308, Vali Fast Blue 2606, Oil Blue BOS (manufactured by Orient Chemical Industries, Ltd.), Aizen Spilon Blue GNH (manufactured by Hodogaya Chemical Co., Ltd.), Neopen Yellow 075, Neopen Magenta SE1378, Neopen Blue 808, Neopen Blue FF4012, and Neopen Cyan FF4238 (manufactured by BASF).

In the present invention, the oil-soluble dye may be used singly or in a combination of two or more types.

Furthermore, when the oil soluble dye is used as a colorant, another colorant such as a water-soluble dye, a disperse dye, or a pigment may be contained as necessary in a range that does not interfere with the effects of the present invention.

In the present invention, a disperse dye may be used in a range that enables it to be dissolved in a water-immiscible organic solvent. Disperse dyes generally include water-soluble dyes, but in the present invention it is preferable for the disperse dye to be used in a range such that it dissolves in a water-immiscible organic solvent.

Specific preferred examples of the disperse dye include Cl Disperse Yellow 5, 42, 54, 64, 79, 82, 83, 93, 99, 100, 119, 122, 124, 126, 160, 184:1, 186, 198, 199, 201, 204, 224, and 237; Cl Disperse Orange 13, 29, 31:1, 33, 49, 54, 55, 66, 73, 118, 119, and 163; Cl Disperse Red 54, 60, 72, 73, 86, 88, 91, 92, 93, 111, 126, 127, 134, 135, 143, 145, 152, 153, 154, 159, 164, 167:1, 177, 181, 204, 206, 207, 221, 239, 240, 258, 277, 278, 283, 311, 323, 343, 348, 356, and 362; Cl Disperse Violet 33; Cl Disperse Blue 56, 60, 73, 87, 113, 128, 143, 148, 154, 158, 165, 165:1, 165:2, 176, 183, 185, 197, 198, 201, 214, 224, 225, 257, 266, 267, 287, 354, 358, 365, and 368; and Cl Disperse Green 6:1 and 9.

The colorant that can be used in the present invention is preferably added to the ink composition or the inkjet recording ink composition and then dispersed in the ink to an appropriate degree. For dispersion of the colorant, for example, a dispersing machine such as a ball mill, a sand mill, an attritor, a roll mill, an agitator, a Henschel mixer, a colloidal mill, an ultrasonic homogenizer, a pearl mill, a wet type jet mill, or a paint shaker may be used.

The colorant may be added directly to the ink composition of the present invention, but in order to improve dispersibility it may be added in advance to a solvent or a dispersing medium such as a radically polymerizable compound used in the present invention.

In the present invention, in order to avoid the problem of the solvent resistance being degraded when the solvent remains in the cured image and the VOC (Volatile Organic Compound) problem of the residual solvent, it is preferable to add the colorant in advance to a dispersing medium such as a radically polymerizable compound. As a polymerizable compound used, it is preferable in terms of dispersion suitability to select a monomer having the lowest viscosity.

These colorants may be used by appropriately selecting one type or two or more types according to the intended purpose of the ink composition.

When a colorant such as a pigment that is present as a solid in the ink composition of the present invention is used, it is preferable for the colorant, the dispersant, the dispersing medium, dispersion conditions, and filtration conditions to be set so that the average particle size of colorant particles is preferably 0.005 to 0.5 µm, more preferably 0.01 to 0.45 µm, and yet more preferably 0.015 to 0.4 µm. By such control of particle size, clogging of a head nozzle can be suppressed, and the ink storage stability, the ink transparency, and the curing sensitivity can be maintained.

The content of the colorant in the ink composition of the present invention is appropriately selected according to the color and the intended purpose, and is preferably 0.01 to 30 wt % relative to the weight of the entire ink composition.

In the present invention, with regard to the ratio by weight of the dispersant relative to the pigment, when the weight of the pigment in the ink composition is P and the weight of the dispersant in the ink composition is R, the ratio by weight (R/P) is 0.05 < R/P ≤ 15, preferably 0.1 ≤ R/P ≤ 10, and more preferably 0.1 ≤ R/P ≤ 5. When the ratio by weight of the dispersant relative to the pigment exceeds 0.5, after being stored over time there is no aggregation/precipitation of the pigment, the ink viscosity does not increase, and an ink composition having excellent storage stability over time can thus be obtained. Furthermore, when the ratio is 15 or less, an ink composition having a low ink viscosity and excellent discharge properties can be obtained.

### (d) Dispersant

The ink composition comprises a dispersant in order to stably disperse the pigment in the ink composition.

As the dispersant that can be used in the present invention, a polymeric dispersant is preferable. The 'polymeric dispersant' referred to in the present invention means a dispersant having a weight-average molecular weight of 1,000 or greater.

Examples of the dispersant include polymeric dispersants such as DisperBYK-101, DisperBYK-102, DisperBYK-103, DisperBYK-106, DisperBYK-111, DisperBYK-161, DisperBYK-162, DisperBYK-163, DisperBYK-164, DisperBYK-166, DisperBYK-167, DisperBYK-168, DisperBYK-170, DisperBYK-171, DisperBYK-174, and DisperBYK-182 (all manufactured by BYK Chemie), EFKA4010, EFKA4046, EFKA4080, EFKA5010, EFKA5207, EFKA5244, EFKA6745, EFKA6750, EFKA7414, EFKA745, EFKA7462, EFKA7500, EFKA7570, EFKA7575, and EFKA7580 (all manufactured by EFKA Additives), Disperse Aid 6, Disperse Aid 8, Disperse Aid 15, and Disperse Aid 9100 (manufactured by San Nopco Limited); various types of Solsperse dispersants such as Solsperse 3000, 5000, 9000, 12000, 13240, 13940, 17000, 22000, 24000, 26000, 28000, 32000, 36000, 39000, 41000, and 71000 (manufactured by Avecia); Adeka Pluronic L31, F38, L42, L44, L61, L64, F68, L72, P95, F77, P84, F87, P94, L101, P103, F108, L121, and P-123 (manufactured by Adeka Corporation), Isonet S-20 (manufactured by Sanyo Chemical Industries, Ltd.), and Disparlon KS-860, 873SN, and 874 (polymeric dispersant), #2150 (aliphatic poly carboxylic acid), and #7004 (polyether ester type) (manufactured by Kusumoto Chemicals, Ltd.).

The content of the dispersant in the ink composition is appropriately selected according to the intended purpose, and is generally preferably 0.05 to 15 wt % relative to the weight of the entire ink composition.

### (e) Other component

The ink composition may comprise another component as necessary.

Examples of the other component include a sensitizer, a cosensitizer, another polymerizable compound, a surfactant, a UV absorber, an antioxidant, an antifading agent, a conductive salt, a solvent, a polymer compound, and a basic compound.

### Sensitizer

The ink composition may contain a sensitizer in order to promote decomposition of the above-mentioned polymerization initiator by absorbing specific actinic radiation, in particular when used for inkjet recording. The sensitizer absorbs specific actinic radiation and attains an electronically excited state. The sensitizer in the electronically excited state causes actions such as electron transfer, energy transfer, or heat generation upon contact with the polymerization initiator. This causes the polymerization initiator to undergo a chemical change and decompose, thus forming a radical, an acid, or a base.

As a sensitizer in the ink composition of the present invention, it is preferable to use a sensitizing dye.

Preferred examples of the sensitizing dye include those that belong to compounds below and have an adsorption wavelength in the region of 350 nm to 450 nm.

Polynuclear aromatic compounds (e.g. pyrene, perylene, triphenylene), xanthenes (e.g. fluorescein, eosin, erythrosine, rhodamine B, rose bengal), cyanines (e.g. thiacarbocyanine, oxacarbocyanine), merocyanines (e.g. merocyanine, carbomerocyanine), thiazines (e.g. thionine, methylene blue, toluidine blue), acridines (e.g. acridine orange, chloroflavin, acriflavine), anthraquinones (e.g. anthraquinone), squaryliums (e.g. squarylium), and coumarins (e.g. 7-diethylamino-4-methylcoumarin).

Preferred examples of the sensitizing dye include compounds represented by Formulae (IX) to (XIII) below.

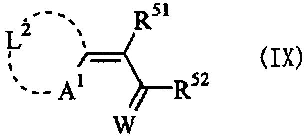

In Formula (IX), A¹ denotes a sulfur atom or NR⁵⁰, R⁵⁰ denotes an alkyl group or an aryl group, L² denotes a non-metallic atomic group forming a basic nucleus of a dye in cooperation with a neighboring A¹ and the neighboring carbon atom, R⁵¹ and R⁵² independently denote a hydrogen atom or a monovalent non-metallic atomic group, and R⁵¹ and R⁵² may be bonded together to form an acidic nucleus of a dye. W denotes an oxygen atom or a sulfur atom.

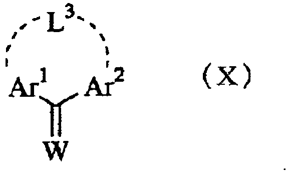

In Formula (X), Ar¹ and Ar² independently denote an aryl group and are connected to each other via a bond of -L³-. Here, L³ denotes -O- or -S-. W has the same meaning as that shown in Formula (IX).

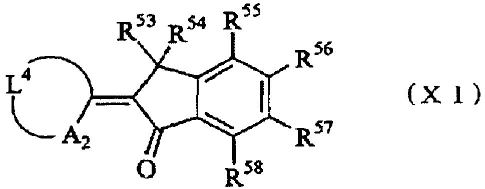

In Formula (XI), A₂ denotes a sulfur atom or NR⁵⁹, L⁴ denotes a non-metallic atomic group forming a basic nucleus of a dye in cooperation with the neighboring A₂ and carbon atom, R⁵³, R⁵⁴, R⁵⁵, R⁵⁶, R⁵⁷, and R⁵⁸ independently denote a monovalent non-metallic atomic group, and R⁵⁹ denotes an alkyl group or an aryl group.

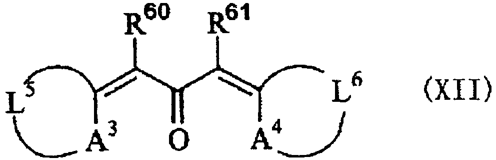

In Formula (XII), A³ and A⁴ independently denote -S-, -NR⁶²-, or -NR⁶³-, R⁶² and R⁶³ independently denote a substituted or unsubstituted alkyl group, or a substituted or unsubstituted aryl group, L⁵ and L⁶ independently denote a non-metallic atomic group forming a basic nucleus of a dye in cooperation with the neighboring A³ and A⁴ and neighboring carbon atom, and R⁶⁰ and R⁶¹ independently denote a hydrogen atom or a monovalent non-metallic atomic group, or are bonded to each other to form an aliphatic or aromatic ring.

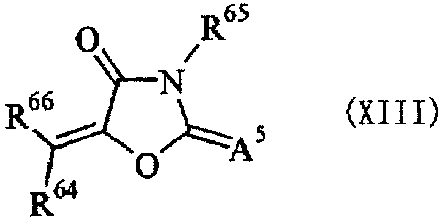

In Formula (XIII), R⁶⁶ denotes an aromatic ring or a hetero ring, which may have a substituent, and A⁵ denotes an oxygen atom, a sulfur atom, or-NR⁶⁷-. R⁶⁴, R⁶⁵, and R⁶⁷ independently denote a hydrogen atom or a monovalent non-metallic atomic group, and R⁶⁷ and R⁶⁴, and R⁶⁵ and R⁶⁷ may be bonded to each other to form an aliphatic or aromatic ring.

Specific examples of the compounds represented by Formulae (IX) to (XIII) include (E-1) to (E-20) listed below.

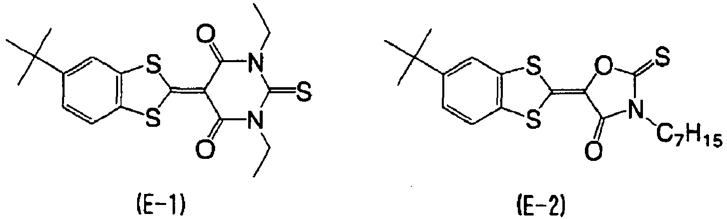

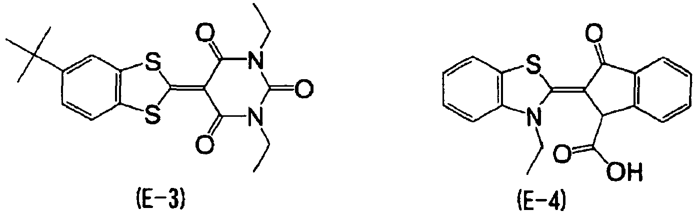

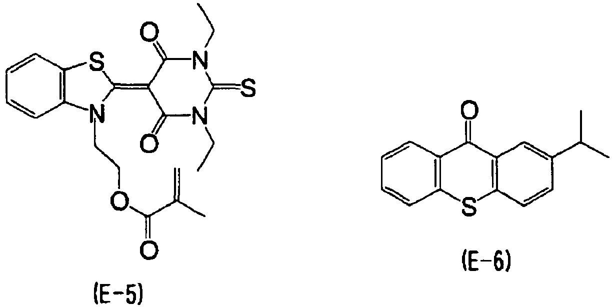

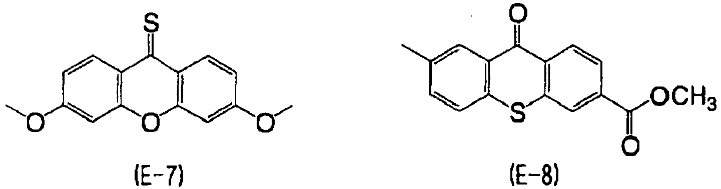

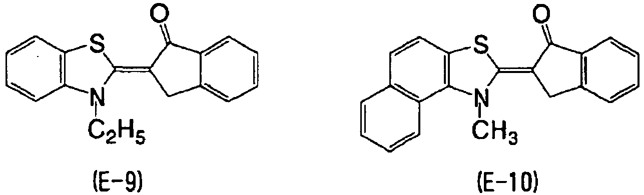

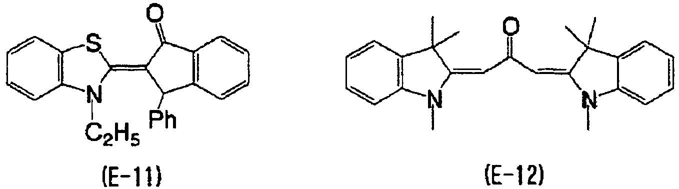

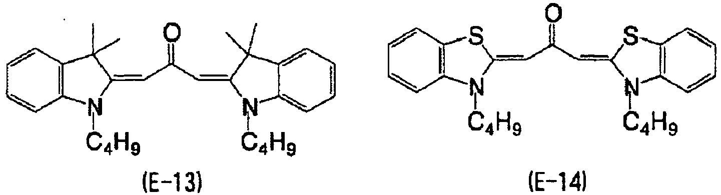

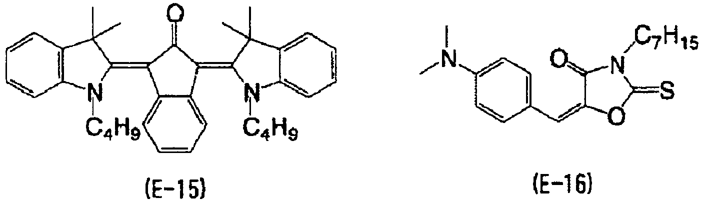

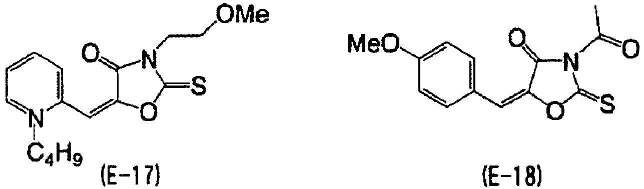

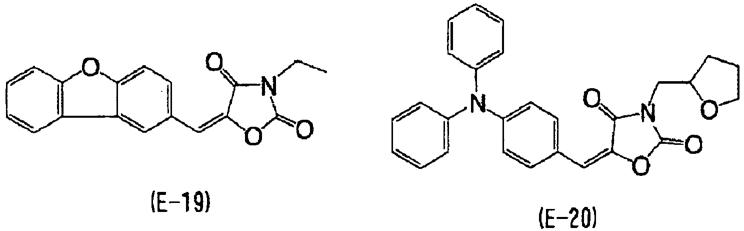

The content of the sensitizer in the ink composition of the present invention is appropriately selected according to the intended purpose, but it is generally preferably 0.05 to 4 wt % relative to the weight of the entire ink composition.

### Co-sensitizer

The ink composition preferably comprises a co-sensitizer (the co-sensitizer' is also called a 'supersensitizer'). In the present invention, the co-sensitizer has the function of further improving the sensitivity of the sensitizing dye to actinic radiation or the function of suppressing inhibition by oxygen of polymerization of a polymerizable compound, etc.

Examples of such a co-sensitizer include amines such as compounds described in M. R. Sander et al., 'Journal of Polymer Society', Vol. 10, p. 3173 (1972), JP-B-44-20189, JP-A-51-82102, JP-A-52-134692, JP-A-59-138205, JP-A-60-84305, JP-A-62-18537, JP-A-64-33104, and Research Disclosure No. 33825, and specific examples thereof include triethanolamine, ethyl p-dimethylaminobenzoate, p-formyldimethylaniline, and p-methylthiodimethylaniline.

Other examples of the co-sensitizer include thiols and sulfides such as thiol compounds described in JP-A-53-702, JP-B-55-500806, and JP-A-5-142772, and disulfide compounds of JP-A-56-75643, and specific examples thereof include 2-mercaptobenzothiazole, 2-mercaptobenzoxazole, 2-mercaptobenzimidazole, 2-mercapto-4(3H)-quinazoline, and β-mercaptonaphthalene.

Yet other examples of the co-sensitizer include amino acid compounds (e.g. N-phenylglycine, etc.), organometallic compounds described in JP-B-48-42965 (e.g. tributyltin acetate, etc.), hydrogen-donating compounds described in JP-B-55-34414, sulfur compounds described in JP-A-6-308727 (e.g. trithiane, etc.), phosphorus compounds described in JP-A-6-250387 (diethylphosphite, etc.), and Si-H, Ge-H compounds described in JP-A-8-54735.

The content of the co-sensitizer in the ink composition is appropriately selected according to the intended purpose, but it is generally preferably 0.05 to 4 wt % relative to the weight of the entire ink composition.

### Surfactant

The ink composition may comprise a surfactant in order to impart stable dischargeability for a long period of time.

As the surfactant, those described in JP-A-62-173463 and JP-A-62-183457 can be cited. Examples include anionic surfactants such as dialkylsulfosuccinic acid salts, alkylnaphthalenesulfonic acid salts, and fatty acid salts, nonionic surfactants such as polyoxyethylene alkyl ethers, polyoxyethylene alkyl allyl ethers, acetylene glycols, and polyoxyethylene/polyoxypropylene block copolymers, and cationic surfactants such as alkylamine salts and quaternary ammonium salts.

Furthermore, as the surfactant, a silicone-based surfactant or a fluorine-based surfactant may also be used suitably.

Examples of the silicone-based surfactant include polydimethylsiloxanes, polyether-modified polydimethylsiloxanes, alkyl-modified polydimethylsiloxanes, and aralkyl-modified polydimethylsiloxanes.

Examples of the fluorine-based surfactant include perfluoroalkyl polyoxyethylene ethanols, fluorinated alkyl esters, perfluoroalkyl alkoxylates, and alkylperfluoroalkylsulfonic acid salts.

### UV absorber

A UV absorber may be used from the viewpoint of improving the weather resistance of an image obtained and preventing discoloration.

The UV absorbers include benzotriazole compounds described in JP-A-58-185677, JP-A-61-190537, JP-A-2-782, JP-A-5-197075 and JP-A-9-34057; benzophenone compounds described in JP-A-46-2784, JP-A-5-194483 and US Pat. No. 3,214,463; cinnamic acid compounds described in JP-B-48-30492, JP-B-56-21141 and JP-A-10-88106; triazine compounds described in JP-A-4-298503, JP-A-8-53427, JP-A-8-239368, JP-A-10-182621 and JP-W-8-501291 (the term "JP-W" as used herein means an unexamined published international patent application); compounds described in Research Disclosure No. 24239; and compounds represented by stilbene and benzoxazole compounds, which absorb ultraviolet rays to emit fluorescence, the so-called fluorescent brightening agents.

The amount thereof added is appropriately selected according to the intended application, and it is generally on the order of 0.5 to 15 wt % on the basis of the solids content in the ink composition.

### Antioxidant

In order to improve the stability of the ink composition, an antioxidant may be added. Examples of the antioxidant include those described in Laid-open European Patent Nos. 223739, 309401, 309402, 310551, 310552, and 459416, Laid-open German Patent No. 3435443, JP-A-54-48535, JP-A-62-262047, JP-A-63-113536, JP-A-63-163351, JP-A-2-262654, JP-A-2-71262, JP-A-3-121449, JP-A-5-61166, JP-A-5-119449, and US Pat. Nos. 4,814,262 and 4,980,275.

The amount thereof added is appropriately selected according to the intended application, and it is preferably on the order of 0.1 to 8 wt % on the basis of the solids content in the ink composition.

### Antifading agent

The ink composition may employ various organic and metal complex antifading agents. The organic antifading agents include hydroquinones, alkoxyphenols, dialkoxyphenols, phenols, anilines, amines, indanes, chromans, alkoxyanilines, and heterocycles, and the metal complex antifading agents include nickel complexes and zinc complexes. More specifically, there can be used compounds described in patents cited in Research Disclosure, No. 17643, Items VII-I to J, ibid., No.15162, ibid., No.18716, page 650, lefthand column, ibid., No. 36544, page 527, ibid., No. 307105, page 872, and ibid., No. 15162, and compounds contained in general formulae and compound examples of typical compounds described in JP-A-62-21572, pages 127 to 137.

The amount thereof added is appropriately selected according to the intended application, and it is preferably on the order of 0.1 to 8 wt % on the basis of the solids content in the ink composition.

### Conductive salt

The ink composition may contain, for the purpose of controlling discharge properties, a conductive salt such as potassium thiocyanate, lithium nitrate, ammonium thiocyanate, or dimethylamine hydrochloride.

### Solvent

It is also effective to add a trace amount of organic solvent to the ink composition in order to improve the adhesion to a support.

Examples of the solvent include ketone-based solvents such as acetone, methyl ethyl ketone, and diethyl ketone, alcohol-based solvents such as methanol, ethanol, 2-propanol, 1-propanol, 1-butanol, and tert-butanol, chlorine-based solvents such as chloroform and methylene chloride, aromatic-based solvents such as benzene and toluene, ester-based solvents such as ethyl acetate, butyl acetate, and isopropyl acetate, ether-based solvents such as diethyl ether, tetrahydrofuran, and dioxane, and glycol ether-based solvents such as ethylene glycol monomethyl ether and ethylene glycol dimethyl ether.

In this case, it is effective if the amount thereof added is in a range that does not cause problems with the solvent resistance or the VOC, and the amount is preferably in the range of 0.1 to 5 wt % relative to the total amount of the ink composition, and more preferably 0.1 to 3 wt %.

### High molecular weight compound

The ink composition may contain various types of high molecular weight compounds in order to adjust film physical properties. Examples of the high molecular weight compounds include acrylic polymers, polyvinylbutyral resins, polyurethane resins, polyamide resins, polyester resins, epoxy resins, phenol resins, polycarbonate resins, polyvinylbutyral resins, polyvinylformal resins, shellac, vinylic resins, acrylic resins, rubber-based resins, waxes, and other natural resins. They may be used in a combination of two or more types. Among these, a vinylic copolymer obtained by copolymerization of an acrylic monomer is preferable. Furthermore, as a copolymer component of the high molecular weight compound, a copolymer containing as a structural unit a carboxyl group-containing monomer, an alkyl methacrylate ester, or an alkyl acrylate ester' may preferably be used.

### Basic compound

The basic compound is preferably added from the viewpoint of improving the storage stability of the ink composition. A basic compound that can be used in the present invention is a known basic compound, and preferred examples thereof include a basic inorganic compound such as an inorganic salt or a basic organic compound such as an amine.

In addition to the above, the composition may contain as necessary, for example, a leveling additive, a matting agent, a wax for adjusting film physical properties, or a tackifier in order to improve the adhesion to a recording medium such as polyolefin or PET, the tackifier not inhibiting polymerization.

Specific examples of the tackifier include high molecular weight tacky polymers described on pp. 5 and 6 of JP-A-2001-49200 (e.g. a copolymer formed from an ester of (meth)acrylic acid and an alcohol having an alkyl group with 1 to 20 carbons, an ester of (meth)acrylic acid and an alicyclic alcohol having 3 to 14 carbons, or an ester of (meth)acrylic acid and an aromatic alcohol having 6 to 14 carbons), and a low molecular weight tackifying resin having a polymerizable unsaturated bond.

### Properties of ink composition

In the present invention, the ink composition has a viscosity at 25°C of preferably no more than 40 mPa·s, more preferably 5 to 40 mPa·s, and yet more preferably 7 to 30 mPa·s. Furthermore, the viscosity of the ink composition at the discharge temperature (preferably 25°C to 80°C, and more preferably 25°C to 50°C) is preferably 3 to 15 mPa·s, and more preferably 3 to 13 mPa·s. With regard to the ink composition of the present invention, it is preferable that its component ratio is appropriately adjusted so that the viscosity is in the above-mentioned range. When the viscosity at room temperature is set to be high, even when a porous recording medium is used, penetration of the ink into the recording medium can be prevented, and uncured monomer can be reduced. Furthermore, ink spreading when ink droplets have landed can be suppressed, and as a result there is the advantage that the image quality is improved.

The surface tension of the ink composition of the present invention at 25°C is preferably 20 to 35 mN/m, and more preferably 23 to 33 mN/m. When recording is carried out on various types of recording medium such as polyolefin, PET, coated paper, and uncoated paper, from the viewpoint of spread and penetration, it is preferably at least 20 mN/m, and from the viewpoint of wettability it is preferably not more than 35 mN/m.

By taking a relation of '(a surface tension of the ink composition B, which is an upper part of an image) < (a surface tension of the ink compo sition A, which is a lower part of an image)', a flat image is obtained, and a good surface adhesion between the ink composition A and the ink comp osition B is obtained, and it is preferably that a difference between a surfa ce tension of the ink composition A and a surface tension of the ink comp osition B is at least 2 mN/m.

An ink set that can be used in the present invention is preferably an ink set in which at least four dark color ink compositions of yellow, cyan, magenta, and black are combined, more preferably an ink set in which five dark color ink compositions of yellow, cyan, magenta, black, and white are combined, and yet more preferably an ink set in which five dark color ink compositions of yellow, cyan, magenta, black, and white and a transparent clear ink composition are combined.

The 'dark color ink composition' referred to in the present invention means an ink composition having a colorant content of greater than 1 wt % of the total ink composition. The colorant is not particularly limited; a known colorant may be used, and examples thereof include a pigment and an oil-soluble dye.

When an ink set that can be used in the present invention comprises at least one dark color ink composition and the ink composition of the present invention, and the dark color ink composition and a pale color ink composition comprise similar color colorants, the colorant concentration ratio of the dark color ink composition and the pale color ink composition is preferably dark color ink composition: pale color ink composition = 15:1 to 4:1, more preferably 12:1 to 4:1, and yet more preferably 10:1 to 4.5:1. When it is in the above-mentioned range, a vivid full color image with little feeling of grain is obtained.

### Examples

The present invention is explained below in further detail by reference to Examples and Comparative Examples. However, the present invention should not be construed as being limited to these Examples.

In addition, 'parts' described below means 'parts by weight' unless otherwise specified, and '%' described below means 'wt %' unless otherwise specified.

Starting materials for the radically polymerizable inks used in the present invention are as follows.
IRGALITE Blue GLVO (cyan pigment, manufactured by Ciba Specialty Chemicals)
CINQUASIA Magenta RT-335-D (magenta pigment, manufactured by Ciba Specialty Chemicals)
Novoperm Yellow H2G (yellow pigment, manufactured by Clariant)
Special Black 250 (black pigment, manufactured by Ciba Specialty Chemicals)
Tipaque CR-60-2 (white pigment, manufactured by Ishihara Sangyo Kaisha Ltd.) *N*-Vinylcaprolactam (NVC, manufactured by BASF)
SR 506 (isobornyl acrylate, manufactured by Sartomer Company Inc.)
NK Ester AMP-10G (NKAMP-10G, PEA (phenoxyethyl acrylate), manufactured by Shin-Nakamura Chemical Co., Ltd.)
SR 508 (dipropylene glycol diacrylate, manufactured by Sartomer Company Inc.)
SR 9003 (propylene glycol-modified neopentyl glycol diacrylate, manufactured by Sartomer Company Inc.)
SR 504 (EO-modified trimethylolpropane triacrylate (EO 3 mol adduct), manufactured by Sartomer Company Inc.)
Solsperse 32000 (dispersant, manufactured by Noveon)
Solsperse 36000 (dispersant, manufactured by Noveon)
FIRSTCURE ST-1 (polymerization inhibitor, manufactured by ChemFirst)
Lucirin TPO (photoinitiator, manufactured by BASF)
Benzophenone (photoinitiator, manufactured by Wako Pure Chemical Industries, Ltd.)
IRGACURE 184 (photoinitiator, 1-hydroxycyclohexyl phenyl ketone, manufactured by Ciba Specialty Chemicals)
BYK-307 (surfactant, manufactured by BYK Chemie)
FIRSTCURE ITX (sensitizer, manufactured by ChemFirst)

Mill bases for radically polymerizable ink compositions were prepared as follows.

### Preparation of Cyan mill base A

300 parts by weight of IRGALITE Blue GLVO, 600 parts by weight of SR 9003, and 100 parts by weight of Solsperse 32000 were stirred and mixed to give Cyan mill base A. Preparation of Cyan mill base A was carried out by putting it into an M50 disperser motor mill (manufactured by Eiger) and dispersing using zirconia beads having a diameter of 0.65 mm at a peripheral speed of 9 m/s for 4 hours.

### Preparation of Magenta mill base B

300 parts by weight of CINQUASIA Magenta RT-335-D, 600 parts by weight of SR 9003, and 100 parts by weight of Solsperse 32000 were stirred and mixed to give Magenta mill base B. Preparation of Magenta mill base B was carried out by putting it into an M50 disperser motor mill (manufactured by Eiger) and dispersing using zirconia beads having a diameter of 0.65 mm at a peripheral speed of 9 m/s for 10 hours.

### Preparation of Yellow mill base C

300 parts by weight of Novoperm Yellow H2G, 600 parts by weight of SR 9003, and 100 parts by weight of Solsperse 32000 were stirred and mixed to give Yellow mill base C. Preparation of Yellow mill base C was carried out by putting it into an M50 disperser motor mill (manufactured by Eiger) and dispersing using zirconia beads having a diameter of 0.65 mm at a peripheral speed of 9 m/s for 10 hours.

### Preparation of Black mill base D

300 parts by weight of Special Black 250, 600 parts by weight of SR 9003, and 100 parts by weight of Solsperse 32000 were stirred and mixed to give Black mill base D. Preparation of Black mill base D was carried out by putting it into an M50 disperser motor mill (manufactured by Eiger) and dispersing using zirconia beads having a diameter of 0.65 mm at a peripheral speed of 9 m/s for 7 hours.

### Preparation of White mill base E

500 parts by weight of Tipaque CR60-2, 450 parts by weight of NK Ester AMP-10G, and 50 parts by weight of Solsperse 36000 were stirred and mixed to give White mill base E. Preparation of White mill base E was carried out by putting it into an M50 disperser motor mill (manufactured by Eiger) and dispersing using zirconia beads having a diameter of 0.65 mm at a peripheral speed of 9 m/s for 4 hours.

### Preparation of inkjet ink compositions A-1

The components shown in Table 1 were stirred using a high-speed water-cooled stirrer to give cyan (C), magenta (M), yellow (Y), black (K), and white (W) UV inkjet inks A-1. A clear ink (CL) containing no pigment was also prepared.

**(Table 1)**

| | | Ink composition A-1 | | | | | |
|---|---|---|---|---|---|---|---|
| | Color | C | M | Y | K | W | CL |
| Pigment dispersion | Cyan mill base A | 6 | - | - | - | - | - |
| | Magenta mill base B | - | 12 | - | - | - | - |
| | Yellow mill base C | - | - | 12 | - | - | - |
| | Black mill base D | - | - | - | 6 | - | - |
| | White mill base E | - | - | - | - | 31 | - |
| Monofunctional monomer | *N*-Vinylcaprolactam | 17 | 15 | 15 | 17 | 11 | 18 |
| | NK-AMP 10G (phenoxyethyl acrylate) | 33.4 | 31.4 | 31.4 | 33.4 | 21.4 | 38.4 |
| | SR 506 (isobornyl acrylate) | 5 | 5 | 5 | 5 | 5 | 5 |
| Polyfunctional monomer | SR 508 (dipropylene glycol diacrylate) | 20 | 18 | 18 | 20 | 13 | 20 |
| | SR 504 (EO-modified trimethylolpropane triacrylate) | 5 | 5 | 5 | 5 | 5 | 5 |
| Polymerization initiator | Lucirin TPO | 8.5 | 8.5 | 8.5 | 8.5 | 8.5 | 8.5 |
| | IRGACURE 184 | 2 | 2 | 2 | 2 | 2 | 2 |
| | Benzophenone | 3 | 3 | 3 | 3 | 3 | 3 |
| Polymerization inhibitor | FIRSTCURE ST-1 | 0.05 | 0.05 | 0.05 | 0.05 | 0.05 | 0.05 |
| Surfactant | BYK 307 | 0.05 | 0.05 | 0.05 | 0.05 | 0.05 | 0.05 |
| Total (wt %) | | 100.00 | 100.00 | 100.00 | 100.00 | 100.00 | 100.00 |
| Total weight of monofunctional monomer (wt %) | | 55.4 | 51.4 | 51.4 | 55.4 | 51.35 | 61.4 |
| Total weight of polyfunctional monomer (including concentration in pigment dispersion) (wt %) | | 26.8 | 26.6 | 26.6 | 26.8 | 27.3 | 25 |
| Monofunctional monomer proportion (%) | | 67 | 66 | 66 | 67 | 65 | 71 |

### Preparation of inkjet ink compositions B-1

The components shown in Table 2 were stirred using a high-speed water-cooled stirrer to give cyan (C), magenta (M), yellow (Y), black (K), and white (W) UV inkjet inks B-1. A clear ink (CL) containing no pigment was also prepared.

**(Table 2)**

| | | Ink composition B-1 | | | | | |
|---|---|---|---|---|---|---|---|
| | Color | C | M | Y | K | W | CL |
| Pigment dispersion | Cyan mill base A | 6 | - | - | - | - | - |
| | Magenta mill base B | - | 12 | - | - | - | - |
| | Yellow mill base C | - | - | 12 | - | - | - |
| | Black mill base D | - | - | - | 6 | - | - |
| | White mill base E | - | - | - | - | 31 | - |
| Polyfunctional monomer | SR 508 (dipropylene glycol diacrylate) | 65.4 | 59.4 | 59.4 | 65.4 | 47.4 | 68.4 |
| | SR 504 (EO-modified trimethylolpropane triacrylate) | 15 | 15 | 15 | 15 | 8 | 18 |
| Polymerization initiator | Lucirin TPO | 8.5 | 8.5 | 8.5 | 8.5 | 8.5 | 8.5 |
| | IRGACURE 184 | 2 | 2 | 2 | 2 | 2 | 2 |
| | Benzophenone | 3 | 3 | 3 | 3 | 3 | 3 |
| Polymerization inhibitor | FIRSTCURE ST-1 | 0.05 | 0.05 | 0.05 | 0.05 | 0.05 | 0.05 |
| Surfactant | BYK 307 | 0.05 | 0.05 | 0.05 | 0.05 | 0.05 | 0.05 |
| Total (wt %) | | 100.00 | 100.00 | 100.00 | 100.00 | 100.00 | 100.00 |
| Total weight of monofunctional monomer (wt %) | | 0 | 0 | 0 | 0 | 13.95 | 0 |
| Total weight of polyfunctional monomer (including concentration in pigment dispersion) (wt %) | | 82.2 | 78 | 78 | 82.2 | 55.4 | 86.4 |
| Polyfunctional monomer proportion (%) | | 100 | 100 | 100 | 100 | 80 | 100 |

### Example 1

### Inkjet image recording method

Subsequently, recording was carried out on a support using an inkjet recording system having 12 piezo type inkjet nozzles and 12 UV irradiation lamps arranged as shown in FIG. 1. A type D Durometer was installed in order to measure the hardness of a support before printing, and a measurement value was fed back to a discharge control section of the inkjet recording system. An IR film thickness meter was also installed on the transport conveyor in order to detect the thickness of the support, and a measurement value was fed back to the discharge control section of the inkjet recording system.

The ink composition supply system comprised a main tank, a supply pipe, an ink composition supply tank immediately before an inkjet head, a filter, and a piezo type inkjet head, and a section from the ink composition supply tank to the inkjet head was thermally insulated and heated. Temperature sensors were provided on the ink composition supply tank and in the vicinity of the nozzle of the inkjet head, and the temperature was controlled so that the nozzle section was always at 45°C ±2°C. The piezo type inkjet head was driven so as to discharge multisize dots of 8 to 30 pL at a resolution of 720 x 720 dpi.

The exposure system, the main scanning speed, and the discharge frequency were adjusted so that, after landing, UV light was focused to give an exposure area illumination intensity of 1,500 mW/cm², and irradiation started 0.1 sec. after the ink landed on the support. The cumulative amount of light applied after discharging each ink composition was adjusted so as to be 750 mJ/cm². The UV lamp employed a HAN250NL high-cure mercury lamp (manufactured by GS Yuasa Corporation). Here, dpi referred to in the present invention denotes the number of dots per 2.54 cm.

In accordance with the above method, only ink composition A-1 was used, and an image with 100% of each color of yellow (Y), cyan (C), magenta (M), black (K), white (W), and clear (CL) ink compositions was formed on a PET film (HK-31WF, film thickness 188 µm, manufactured by Higashiyama Film Corporation). The hardness of the image thus formed was measured using a Durometer (model P1-D automatic rubber hardness meter, manufactured by Kobunshi Keiki Co., Ltd.).

An image with 100% of each color was formed in the same manner using only ink composition B-1, and the hardness of the image formed was measured.

Furthermore, images with 100% of each color were formed in the same manner using ink composition A-1 and ink composition B-1 at the proportions shown in Table 3, and the hardness of the images formed was measured.

Results of the measurement of the hardness of each image are given in Table 3.

**(Table 3)**

| A-1 (wt %) | B-1 (wt %) | Hardness |
|---|---|---|
| 100 | 0 | 15 |
| 80 | 20 | 30 |
| 60 | 40 | 50 |
| 40 | 60 | 60 |
| 20 | 80 | 80 |
| 0 | 100 | 95 |

Color image printed materials were produced using the above system by measuring the hardness of the various types of supports below and adjusting the proportion of the ink compositions discharged from each head using yellow (Y), cyan (C), magenta (M), black (K), white (W), and clear (CL) ink compositions in accordance with the results of measurement of the hardness of the support and the hardness of the printed materials using radical ink compositions A-1 and radical ink compositions B-1 shown in Table 3. In the case of a roll type support and a support having a film thickness of no greater than 100 µm, the amount of ink composition A-1 discharged was increased by 5% of the calculated value, and color image printed materials 1 were produced.
PET film 1 (PET1, hardness: 85, film thickness: 188 µm): HK-31WF, manufactured by Higashiyama Film Corporation
PET film 2 (PET2, hardness: 85, film thickness: 100 µm): HK-31WF, manufactured by Higashiyama Film Corporation
Acrylic plate (hardness: 90, thickness: 1 mm): Acrylite L, Mitsubishi Rayon Co., Ltd.
Polycarbonate plate (hardness: 95, thickness: 2 mm): LEXAN 9034 Clear, manufactured by Asahi Glass Co., Ltd.
Roll type vinyl chloride sheet (roll shape, hardness: 20, thickness: 120 µm): LLJET glossy type, manufactured by Sakurai
Roll type polypropylene sheet (roll shape, hardness: 65, thickness: 50 µm): Pylen P1111, Toyobo Co., Ltd.

### Example 2

Color image printed materials 2 were produced in the same manner as in Example 1 using an inkjet recording experimental system having 12 piezo type inkjet nozzles and a UV irradiation lamp arranged as shown in FIG. 2 except that, after discharging all inks, UV light was focused to give an exposure area illumination intensity of 2,100 mW/cm² and a cumulative amount of light 5,000 mJ/cm².

### Comparative Example 1

Using only ink composition A-1, color image printed materials 3 were produced using various types of supports in the same manner as in Example 2.

### Comparative Example 2

Using only ink composition B-1, color image printed materials 4 were produced using various types of supports in the same manner as in Example 2.

### Evaluation methods

The flexibility evaluation and scratch resistance evaluation below were carried out. The results are given in Table 4.

### Flexibility evaluation method: bending test

In the examples, as a method for evaluating the flexibility of color image printed materials on PET film 2, roll type vinyl chloride sheet, and roll type polypropylene sheet, a bending test was carried out.

The bending test was carried out by bending a support with an image formed thereon 1 to 10 times under conditions of 25°C, and evaluation was made according to the presence or absence of cracks in the image area.

The evaluation criteria were as follows.
3: No cracks occurred at all in an area of the color image printed material that was bent 10 times.
2: No cracks occurred at all in an area of the color image printed material that was bent 5 times, but cracks occurred in an area that was bent 10 times.
1: Cracks occurred in an area of the color image printed material that was bent once.

### Scratch resistance evaluation method

A color image printed material was cut into A5 size, a support of the same type and the same size was superimposed thereon, they were placed in an A4 sized box, the box was then shaken horizontally 10 times, and scratches on the printed material were evaluated.
3: No scratches at all.
2: Rub marks remained.
1: There were scratches and there was an area with the image peeled off.

**(Table 4)**

| | Support | Hardness | Proportion of ink composition A-1 (wt %) | Proportion of ink composition B-1 (wt %) | Flexibility evaluation | Scratch resistance evaluation |
|---|---|---|---|---|---|---|
| Ex. 1 | PET 1 | 85 | 12.5 | 87.5 | - | 3 |
| | PET 2 | 85 | 17.5 | 82.5 | 3 | 3 |
| | Acrylic plate | 90 | 6.25 | 93.75 | - | 3 |
| | Polycarbonate plate | 95 | 0 | 100 | - | 3 |
| | Vinyl chloride (roll) | 20 | 98 | 2 | 3 | 3 |
| | Polypropylene (roll) | 65 | 42.5 | 57.5 | 3 | 3 |
| Ex. 2 | PET 1 | 85 | 12.5 | 87.5 | - | 3 |
| | PET 2 | 85 | 17.5 | 82.5 | 3 | 3 |
| | Acrylic plate | 90 | 6.25 | 93.75 | - | 3 |
| | Polycarbonate plate | 95 | 0 | 100 | - | 3 |
| | Vinyl chloride (roll) | 20 | 98 | 2 | 3 | 3 |
| | Polypropylene (roll) | 65 | 42.5 | 57.5 | 3 | 3 |
| Comp. Ex. 1 | PET 1 | 85 | 100 | 0 | - | 1 |
| | PET 2 | 85 | 100 | 0 | 3 | 1 |
| | Acrylic plate | 90 | 100 | 0 | - | 1 |
| | Polycarbonate plate | 95 | 100 | 0 | - | 1 |
| | Vinyl chloride (roll) | 20 | 100 | 0 | 3 | 3 |
| | Polypropylene (roll) | 65 | 100 | 0 | 3 | 1 |
| Comp. Ex. 2 | PET 1 | 85 | 0 | 100 | - | 3 |
| | PET 2 | 85 | 0 | 100 | 1 | 3 |
| | Acrylic plate | 90 | 0 | 100 | - | 3 |
| | Polycarbonate plate | 95 | 0 | 100 | - | 3 |
| | Vinyl chloride (roll) | 20 | 0 | 100 | 1 | 3 |
| | Polypropylene (roll) | 65 | 0 | 100 | 1 | 3 |

Starting materials for the cationically polymerizable inks used in the present invention are as follows.
IRGALITE Blue GLVO (cyan pigment, manufactured by Ciba Specialty Chemicals)
CINQUASIA Magenta RT-335-D (magenta pigment, manufactured by Ciba Specialty Chemicals)
Novoperm Yellow H2G (yellow pigment, manufactured by Clariant)
Special Black 250 (black pigment, manufactured by Ciba Specialty Chemicals)
Tipaque CR-60-2 (white pigment, manufactured by Ishihara Sangyo Kaisha Ltd.)
Solsperse 32000 (dispersant, manufactured by Noveon)
Solsperse 36000 (dispersant, manufactured by Noveon)
Cyracure UVR6105 (manufactured by Dow Chemical) 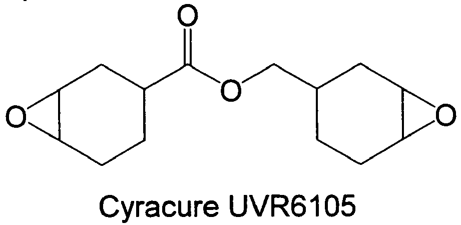 OXT-211 (3-ethyl-3-(phenoxymethyl)oxetane, manufactured by Toagosei Co., Ltd.)
OXT-221 (di[1-ethyl(3-oxetanyl)]methyl ether, manufactured by Toagosei Co., Ltd.) 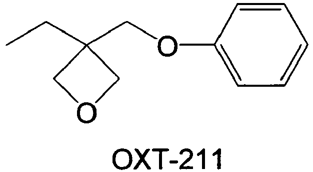 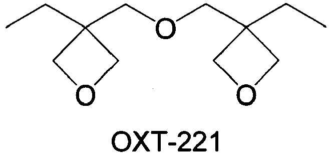 CPI-100P (sulfonium salt, manufactured by San-Apro Ltd.)
Dibutoxyanthracene (manufactured by Kawasaki Kasei Chemicals Ltd.) BYK 307 (manufactured by BYK Chemie)

Mill bases for cationically polymerizable ink compositions were prepared as follows.

### Preparation of cyan mill base F

300 parts by weight of IRGALITE Blue GLVO, 600 parts by weight of OXT-221, and 100 parts by weight of Solsperse 32000 were stirred and mixed to give cyan pigment mill base F. Preparation of cyan mill base F was carried out by putting it into an M50 disperser motor mill (manufactured by Eiger) and dispersing using zirconia beads having a diameter of 0.65 mm at a peripheral speed of 9 m/s for 3 hours.

### Preparation of magenta mill base G

300 parts by weight of CINQUASIA Magenta RT-335-D, 600 parts by weight of OXT-221, and 100 parts by weight of Solsperse 32000 were stirred and mixed to give magenta mill base G. Preparation of magenta mill base G was carried out by putting it into an M50 disperser motor mill (manufactured by Eiger) and dispersing using zirconia beads having a diameter of 0.65 mm at a peripheral speed of 9 m/s for 8 hours.

### Preparation of yellow mill base H

300 parts by weight of Novoperm Yellow H2G, 600 parts by weight of OXT-221, and 100 parts by weight of Solsperse 32000 were stirred and mixed to give yellow mill base H. Preparation of yellow mill base H was carried out by putting it into an M50 disperser motor mill (manufactured by Eiger) and dispersing using zirconia beads having a diameter of 0.65 mm at a peripheral speed of 9 m/s for 8 hours.

### Preparation of black mill base I

300 parts by weight of Special Black 250, 600 parts by weight of OXT-221, and 100 parts by weight of Solsperse 32000 were stirred and mixed to give black mill base I. Preparation of black mill base I was carried out by putting it into an M50 disperser motor mill (manufactured by Eiger) and dispersing using zirconia beads having a diameter of 0.65 mm at a peripheral speed of 9 m/s for 5.5 hours.

### Preparation of white mill base J

500 parts by weight of Tipaque CR60-2, 450 parts by weight of OXT-221, and 50 parts by weight of Solsperse 36000 were stirred and mixed to give white mill base J. Preparation of white mill base J was carried out by putting it into an M50 disperser motor mill (manufactured by Eiger) and dispersing using zirconia beads having a diameter of 0.65 mm at a peripheral speed of 9 m/s for 3 hours.

### Preparation of inkjet ink compositions A-2

The components shown in Table 5 were stirred using a high-speed water-cooled stirrer to give cyan (C), magenta (M), yellow (Y), black (K), and white (W) UV inkjet ink compositions A-2. A clear ink (CL) containing no pigment was also prepared.

**(Table 5)**

| | | Ink composition A-2 | | | | | |
|---|---|---|---|---|---|---|---|
| | Color | C | M | Y | K | W | CL |
| Pigment dispersion | Cyan mill base F | 6 | - | - | - | - | - |
| | Magenta mill base G | - | 12 | - | - | - | - |
| | Yellow mill base H | - | - | 12 | - | - | - |
| | Black mill base I | - | - | - | 6 | - | - |
| | White mill base J | - | - | - | - | 31 | - |
| Monofunctional monomer | OXT-211 | 56 | 53 | 53 | 56 | 47 | 61.9 |
| Polyfunctional monomer | UVR6105 | 19.9 | 16.9 | 16.9 | 19.9 | 8.9 | 20 |
| | OXT-221 | 5 | 5 | 5 | 5 | - | 5 |
| Polymerization initiator | CPI-100P | 12 | 12 | 12 | 12 | 12 | 12 |
| | Dibutoxyanthracene | 1 | 1 | 1 | 1 | 1 | 1 |
| Surfactant | BYK 307 | 0.1 | 0.1 | 0.1 | 0.1. | 0.1 | 0.1 |
| Total (wt %) | | 100.00 | 100.00 | 100.00 | 100.00 | 100.00 | 100.00 |
| Total weight of monofunctional monomer (wt %) | | 56 | 53 | 53 | 56 | 47 | 61.9 |
| Total weight of polyfunctional monomer (including concentration in pigment dispersion) (wt %) | | 28.5 | 29.1 | 29.1 | 28.5 | 22.85 | 25 |
| Monofunctional monomer proportion (%) | | 66 | 65 | 65 | 66 | 67 | 71 |

### Preparation of inkjet ink compositions B-2

The components shown in Table 6 were stirred using a high-speed water-cooled stirrer to give cyan (C), magenta (M), yellow (Y), black (K), and white (W) UV inkjet inks B-2. A clear ink (CL) containing no pigment was also prepared.

**(Table 6)**

| | | Ink composition B-2 | | | | | |
|---|---|---|---|---|---|---|---|
| | Color | C | M | Y | K | W | CL |
| Pigment dispersion | Cyan mill base F | 6 | - | - | - | - | - |
| | Magenta mill base G | - | 12 | - | - | - | - |
| | Yellow mill base H | - | - | 12 | - | - | - |
| | Black mill base I | - | - | - | 6 | - | - |
| | White mill base J | - | - | - | - | 31 | - |
| Monofunctional monomer | OXT-211 | 36 | 33 | 33 | 36 | 27 | 33 |
| Polyfunctional monomer | UVR6105 | 19.9 | 16.9 | 16.9 | 19.9 | 8.9 | 19.9 |
| | OXT-221 | 25 | 25 | 25 | 25 | 20 | 34 |
| Polymerization initiator | CPI-100P | 12 | 12 | 12 | 12 | 12 | 12 |
| | Dibutoxyanthracene | 1 | 1 | 1 | 1 | 1 | 1 |
| Surfactant | BYK 307 | 0.1 | 0.1 | 0.1 | 0.1 | 0.1 | 0.1 |
| Total (wt %) | | 100.00 | 100.00 | 100.00 | 100.00 | 100.00 | 100.00 |
| Total weight of monofunctional monomer (wt %) | | 36 | 33 | 33 | 36 | 27 | 33 |
| Total weight of polyfunctional monomer (including concentration in pigment dispersion) (wt %) | | 48.5 | 49.1 | 49.1 | 48.5 | 42.85 | 53.9 |
| Polyfunctional monomer proportion (%) | | 57 | 60 | 60 | 57 | 61 | 62 |

### Example 3

In accordance with the same method as in Example 1, only ink composition A-2 was used, and an image with 100% of each color of yellow (Y), cyan (C), magenta (M), black (K), white (W), and clear (CL) ink compositions was formed on PET film (HK-31WF, film thickness 188 µm, manufactured by Higashiyama Film Corporation). The hardness of the image thus formed was measured using a Durometer.

An image with 100% of each color was formed in the same manner using only ink composition B-2, and the hardness of the image formed was measured.

Furthermore, images with 100% of each color were formed in the same manner using ink composition A-2 and ink composition B-2 at the proportions shown in Table 7, and the hardness of the images formed was measured.

The results of measurement of the hardness of the images are given in Table 7.

**(Table 7)**

| A-2 (wt %) | B-2 (wt %) | Hardness |
|---|---|---|
| 100 | 0 | 15 |
| 80 | 20 | 30 |
| 60 | 40 | 50 |
| 40 | 60 | 60 |
| 20 | 80 | 80 |
| 0 | 100 | 95 |

In accordance with the same system as in Example 1, color image printed materials were produced by measuring the hardness of the various types of supports below and adjusting the proportions of the ink compositions discharged from each head using yellow (Y), cyan (C), magenta (M), black (K), white (W), and clear (CL) ink compositions in accordance with the results of measurement of the hardness of the support and the hardness of the printed materials using cationic ink compositions A-2 and cationic ink compositions B-2 shown in Table 7. In the case of a roll type support and a support having a film thickness of no greater than 100 µm, the amount of ink composition A-2 discharged was increased by 5% of the calculated value, and color image printed materials 5 were produced.
PET film 1 (PET1, hardness: 85, film thickness: 188 µm): HK-31WF, manufactured by Higashiyama Film Corporation
PET film 2 (PET2, hardness: 85, film thickness: 100 µm): HK-31WF, manufactured by Higashiyama Film Corporation
Acrylic plate (hardness: 90, thickness: 1 mm): Acrylite L, Mitsubishi Rayon Co., Ltd.
Polycarbonate plate (hardness: 95, thickness: 2 mm): LEXAN 9034 Clear, manufactured by Asahi Glass Co., Ltd.
Roll type vinyl chloride sheet (roll shape, hardness: 20, thickness: 120 µm): LLJET glossy type, manufactured by Sakurai
Roll type polypropylene sheet (roll shape, hardness: 65, thickness: 50 µm): Pylen P1111, Toyobo Co., Ltd.

### Example 4

Color image printed materials 6 were produced in the same manner as in Example 3 using the inkjet recording experimental system having 12 piezo type inkjet nozzles and a UV irradiation lamp arranged as shown in FIG. 2 except that, after discharging all inks, UV light was focused to give an exposure area illumination intensity of 2,100 mW/cm² and a cumulative amount of light 5,000 mJ/cm².

### Comparative Example 3

Using only ink composition A-2, color image printed materials 7 were produced using various types of supports in the same manner as in Example 4.

### Comparative Examples 4

Using only ink composition B-2, color image printed materials 8 were produced using various types of supports in the same manner as in Example 4.

### Evaluation methods

Flexibility evaluation and scratch resistance evaluation were carried out. The results are given in Table 8.

**(Table 8)**

| | Support | Hardness | Proportion of ink composition A-2 (wt %) | Proportion of ink composition B-2 (wt %) | Flexibility evaluation | Scratch resistance evaluation |
|---|---|---|---|---|---|---|
| Ex. 3 | PET 1 | 85 | 12.5 | 87.5 | | 3 |
| | PET 2 | 85 | 17.5 | 82.5 | 3 | 3 |
| | Acrylic plate | 90 | 6.25 | 93.75 | | 3 |
| | Polycarbonate plate | 95 | 0 | 100 | | 3 |
| | Vinyl chloride (roll) | 20 | 98 | 2 | 3 | 3 |
| | Polypropylene (roll) | 65 | 42.5 | 57.5 | 3 | 3 |
| Ex. 4 | PET 1 | 85 | 12.5 | 87.5 | | 3 |
| | PET 2 | 85 | 17.5 | 82.5 | 3 | 3 |
| | Acrylic plate | 90 | 6.25 | 93.75 | | 3 |
| | Polycarbonate plate | 95 | 0 | 100 | | 3 |
| | Vinyl chloride (roll) | 20 | 98 | 2 | 3 | 3 |
| | Polypropylene (roll) | 65 | 42.5 | 57.5 | 3 | 3 |
| Comp. Ex. 3 | PET 1 | 85 | 100 | 0 | | 1 |
| | PET 2 | 85 | 100 | 0 | 3 | 1 |
| | Acrylic plate | 90 | 100 | 0 | | 1 |
| | Polycarbonate plate | 95 | 100 | 0 | | 1 |
| | Vinyl chloride (roll) | 20 | 100 | 0 | 3 | 3 |
| | Polypropylene (roll) | 65 | 100 | 0 | 3 | 1 |
| Comp. Ex. 4 | PET 1 | 85 | 0 | 100 | - | 3 |
| | PET 2 | 85 | 0 | 100 | 1 | 3 |
| | Acrylic plate | 90 | 0 | 100 | - | 3 |
| | Polycarbonate plate | 95 | 0 | 100 | - | 3 |
| | Vinyl chloride (roll) | 20 | 0 | 100 | 1 | 3 |
| | Polypropylene (roll) | 65 | 0 | 100 | 1 | 3 |

## Claims

1. An inkjet recording method comprising the steps of:
preparing an ink set which comprises:
(i) at least one ink composition A comprising a polymerization initiator (a-1) and a polymerizable compound (b-1), at least 65 wt.% of the polymerizable compound (b-1) being a monofunctional polymerizable compound, and
(ii) at least one ink composition B having the same colour as ink composition A and comprising a polymerization initiator (a-2) and a polymerizable compound (b-2), at least 50 wt.% of the polymerizable compound (b-2) being a polyfunctional polymerizable compound;
detecting one or more characteristics and/or the composition of the support;
selecting the relative amounts of ink composition A and ink composition B to be discharged onto a support based on the detected characteristic(s) and/or composition of the support; and
discharging the selected relative amounts of the ink compositions onto the support.

2. An inkjet recording method according to Claim 1, wherein the detected characteristic(s) and/or composition of the support is at least one of support hardness, support thickness, support stretching characteristics, support thermal characteristics, support elemental composition, support compound composition and support resin composition.

3. An inkjet recording method according to Claim 2, wherein the detected characteristics and/or composition of the support comprise support hardness and support thickness.

4. An inkjet recording method according to any preceding claim, wherein both ink composition A and ink composition B are selected and discharged onto the support.

5. An inkjet recording method according to any preceding claim, further comprising the step of curing the discharged ink(s) using actinic radiation.

6. An inkjet recording apparatus comprising:
an ink set which comprises:
(i) at least one ink composition A comprising a polymerization initiator (a-1) and a polymerizable compound (b-1), at least 65 wt.% of the polymerizable compound (b-1) being a monofunctional polymerizable compound, and
(ii) at least one ink composition B having the same colour as ink composition A and comprising a polymerization initiator (a-2) and a polymerizable compound (b-2), at least 50 wt.% of the polymerizable compound (b-2) being a polyfunctional polymerizable compound;
means for detecting more or more characteristics and/or the composition of the support;
means for selecting the relative amounts of ink composition A and ink composition B to be discharged onto a support based on the detected characteristic(s) and/or composition of the support; and
means for discharging the selected relative amounts of the ink compositions onto the support.

7. An inkjet recording apparatus according to Claim 6, wherein the detection means is able to detect at least one of support hardness, support thickness, support stretching characteristics, support thermal characteristics, support elemental composition, support compound composition and support resin composition.

8. An inkjet recording apparatus according to Claim 7, wherein the detection means is able to detect support hardness and support thickness.

9. An inkjet recording apparatus according to any of Claims 6 to 8, wherein the selection means is able to select the relative amounts of ink composition A and ink composition B so that both ink compositions are discharged onto the support.

10. An inkjet recording apparatus according to Claim 9, further comprising means for curing the discharged ink composition(s) using actinic radiation.

## Patentansprüche

1. Tintenstrahlaufzeichnungsverfahren, die folgenden Schritte umfassend:
Herstellen eines Tintensatzes, der umfasst:
(i) mindestens eine Tintenzusammensetzung A, umfassend einen Polymerisationsinitiator (a-1) und eine polymerisierbare Verbindung (b-1), worin mindestens 65 Gew.-% der polymerisierbaren Verbindung (b-1) eine monofunktionelle polymerisierbare Verbindung sind, und
(ii) mindestens eine Tintenzusammensetzung B, die die gleiche Farbe aufweist wie die Tintenzusammensetzung A und einen Polymerisationsinitiator (a-2) und eine polymerisierbare Verbindung (b-2) umfasst, worin mindestens 50 Gew.-% der polymerisierbaren Verbindung (b-2) eine polyfunktionelle polymerisierbare Verbindung sind;
Bestimmen einer oder mehrerer Eigenschaften und/oder der Zusammensetzung des Trägers;
Auswählen der relativen Mengen der Tintenzusammensetzung A und der Tintenzusammensetzung B, die basierend auf den bestimmten Eigenschaft(en) und/oder der Zusammensetzung des Trägers auf einen Träger entladen werden sollen; und
Entladen der ausgewählten relativen Mengen der Tintenzusammensetzungen auf den Träger.

2. Tintenstrahlaufzeichnungsverfahren gemäß Anspruch 1, worin die bestimmte(n) Eigenschaft(en) und/oder Zusammensetzung des Trägers mindestens eines ist aus Trägerhärte, Trägerdicke, Dehnungseigenschaft des Trägers, thermischen Eigenschaften des Trägers, elementarer Zusammensetzung des Trägers, Verbindungszusammensetzung des Trägers und Harzzusammensetzung des Trägers.

3. Tintenstrahlaufzeichnungsverfahren gemäß Anspruch 2, worin die bestimmten Eigenschaften und/oder Zusammensetzung des Trägers Trägerhärte und Trägerdicke umfassen.

4. Tintenstrahlaufzeichnungsverfahren gemäß mindestens einem der vorangehenden Ansprüche, worin Tintenzusammensetzung A und Tintenzusammensetzung B ausgewählt und auf den Träger entladen werden.

5. Tintenstrahlaufzeichnungsverfahren gemäß mindestens einem der vorangehenden Ansprüche, ferner umfassend den Schritt des Härtens der entladenen Tinte(n) mittels aktinischer Strahlung.

6. Tintenstrahlaufzeichnungsgerät, umfassend:
ein Tintenset, das umfasst:
(i) mindestens eine Tintenzusammensetzung A, umfassend einen Polymerisationsinitiator (a-1) und eine polymerisierbare Verbindung (b-1), worin mindestens 65 Gew.-% der polymerisierbaren Verbindung (b-1) eine monofunktionelle polymerisierbare Verbindung sind, und
(ii) mindestens eine Tintenzusammensetzung B, die die gleiche Farbe aufweist wie die Tintenzusammensetzung A und einen Polymerisationsinitiator (a-2) und eine polymerisierbare Verbindung (b-2) umfasst, worin mindestens 50 Gew.-% der polymerisierbaren Verbindung (b-2) eine polyfunktionelle polymerisierbare Verbindung sind;
eine Vorrichtung zum Bestimmen einer oder mehrerer Eigenschaften und/oder der Zusammensetzung des Trägers;
eine Vorrichtung zum Auswählen der relativen Mengen der Tintenzusammensetzung A und der Tintenzusammensetzung B, die basierend auf den bestimmten Eigenschaft(en) und/oder der Zusammensetzung des Trägers auf einen Träger entladen werden sollen; und
eine Vorrichtung zum Entladen der ausgewählten relativen Mengen der Tintenzusammensetzungen auf den Träger.

7. Tintenstrahlaufzeichnungsgerät gemäß Anspruch 6, worin die Bestimmungsvorrichtung mindestens eines aus Trägerhärte, Trägerdicke, Dehnungseigenschaft des Trägers, thermischen Eigenschaften des Trägers, elementarer Zusammensetzung des Trägers, Verbindungszusammensetzung des Trägers und Harzzusammensetzung des Trägers bestimmen kann.

8. Tintenstrahlaufzeichnungsgerät gemäß Anspruch 7, worin die Bestimmungsvorrichtung Trägerhärte und Trägerdichte bestimmen kann.

9. Tintenstrahlaufzeichnungsgerät gemäß mindestens einem der Ansprüche 6 bis 8, worin die Auswahlvorrichtung die relativen Mengen der Tintenzusammensetzung A und der Tintenzusammensetzung B auswählen kann, so dass beide Tintenzusammensetzungen auf den Träger entladen werden.

10. Tintenstrahlaufzeichnungsgerät gemäß Anspruch 9, ferner umfassend eine Vorrichtung zum Härten der entladenen Tintenzusammensetzung(en) mittels aktinischer Strahlung.

## Revendications

1. Procédé d'enregistrement à jet d'encre comprenant les étapes de :
préparation d'un jeu d'encre qui comprend :
(i) au moins une composition d'encre A comprenant un initiateur de polymérisation (a-1) et un composé polymérisable (b-1), au moins 65 % en poids du composé polymérisable (b-1) étant un composé polymérisable monofonctionnel, et
(ii) au moins une composition d'encre B ayant la même couleur que la composition d'encre A et comprenant un initiateur de polymérisation (a-2) et un composé polymérisable (b-2), au moins 50 % en poids du composé polymérisable (b-2) étant un composé polymérisable polyfonctionnel ;
détection d'une ou plusieurs caractéristiques et/ou de la composition du support ;
sélection des quantités relatives de composition d'encre A et de composition d'encre B à être déchargées sur le support sur la base de la ou des caractéristique(s) détectée(s) et/ou de la composition du support ; et
décharge des quantités relatives sélectionnées des compositions d'encre sur le support.

2. Procédé d'enregistrement à jet d'encre selon la Revendication 1, dans lequel la ou les caractéristique(s) détectée(s) et/ou la composition du support est au moins l'une de la dureté du support, l'épaisseur du support, les caractéristiques d'élongation du support, les caractéristiques thermiques du support, la composition élémentaire du support, la composition du composé de support et la composition de la résine de support.

3. Procédé d'enregistrement à jet d'encre selon la Revendication 2, dans lequel la ou les caractéristique(s) détectée(s) et/ou la composition du support comprend la dureté du support et l'épaisseur du support.

4. Procédé d'enregistrement à jet d'encre selon l'une quelconque des revendications précédentes, dans lequel la composition d'encre A et la composition d'encre B sont toutes les deux sélectionnées et déchargées sur le support.

5. Procédé d'enregistrement à jet d'encre selon l'une quelconque des revendications précédentes, comprenant en outre l'étape de durcissement de l'encre ou des encres déchargée(s) en utilisant du rayonnement actinique.

6. Dispositif d'enregistrement à jet d'encre comprenant :
un jeu d'encres qui comprend :
(i) au moins une composition d'encre A comprenant un initiateur de polymérisation (a-1) et un composé polymérisable (b-1), au moins 65 % en poids du composé polymérisable (b-1) étant un composé polymérisable monofonctionnel, et
(ii) au moins une composition d'encre B ayant la même couleur que la composition d'encre A et comprenant un initiateur de polymérisation (a-2) et un composé polymérisable (b-2), au moins 50 % en poids du composé polymérisable (b-2) étant un composé polymérisable polyfonctionnel ;
un moyen de détection d'une ou plusieurs caractéristiques et/ou de la composition du support ;
un moyen de sélection des quantités relatives de composition d'encre A et de composition d'encre B à être déchargées sur le support basées sur la ou les caractéristique(s) détectée(s) et/ou la composition du support ; et
un moyen de décharge des quantités relatives sélectionnées des compositions d'encre sur le support.

7. Dispositif d'enregistrement à jet d'encre selon la Revendication 6, dans lequel le moyen de détection est apte à détecter au moins l'une de la dureté du support, l'épaisseur du support, les caractéristiques d'élongation du support, les caractéristiques thermiques du support, la composition élémentaire du support, la composition du composé de support et la composition de la résine de support.

8. Dispositif d'enregistrement à jet d'encre selon la Revendication 7, dans lequel le moyen de détection est apte à détecter la dureté du support et l'épaisseur du support.

9. Dispositif d'enregistrement à jet d'encre selon l'une quelconque des Revendications 6 à 8, dans lequel le moyen de sélection est apte à sélectionner les quantités relatives de composition d'encre A et de composition d'encre B de sorte que les deux compositions d'encre soient déchargées sur le support.

10. Dispositif d'enregistrement à jet d'encre selon la Revendication 9, comprenant en outre un moyen de durcissement de la ou les composition(s) d'encre déchargée(s) en utilisant du rayonnement actinique.
